# EUROPEAN PATENT SPECIFICATION

(11) **EP 3 496 431 B1**
(45) Date of publication and mention of the grant of the patent: **06.01.2021**
(21) Application number: 17876833.9
(22) Date of filing: 20.11.2017
(51) Int. Cl.: H04W 40/04, H04W 4/06, H04W 40/22, H04W 40/24, H04W 84/18

(54) **MESSAGE TRANSMISSION METHOD AND APPARATUS**
NACHRICHTENÜBERTRAGUNGSVERFAHREN UND -VORRICHTUNG
PROCÉDÉ ET APPAREIL DE TRANSMISSION DE MESSAGE

(30) Priority: 01.12.2016 CN 201611100131
(43) Date of publication of application: 12.06.2019
(73) Proprietor: Huawei Technologies Co., Ltd., Longgang District Shenzhen, Guangdong 518129 (CN)
(72) Inventor: ZHUANG, Zhe, Shenzhen Guangdong 518129 (CN); WEI, Hanyu, Shenzhen Guangdong 518129 (CN); WANG, Hao, Shenzhen Guangdong 518129 (CN)
(74) Representative: Gill Jennings & Every LLP
(86) International application number: PCT/CN2017/111920
(87) International publication number: WO 2018/099290

(56) References cited:
- EP-A1- 1 107 508
- WO-A1-2016/055122
- CN-A- 102 088 666
- CN-A- 105 682 054
- US-A1- 2004 156 384
- US-A1- 2015 023 213
- US-B2- 7 801 143

## Description

This application claims priority to Chinese Patent Application No. 201611100131.2, filed with the Chinese Patent Office on December 01, 2016 and entitled "PACKET TRANSMISSION METHOD AND APPARATUS".

### TECHNICAL FIELD

This application relates to the field of communications technologies, and in particular, to a packet transmission method and apparatus.

### BACKGROUND

With development of communications technologies, shared medium networks are more widely applied. Common shared medium networks include a wireless sensor network (wireless sensor network, WSN), a power line communication (power line communication, PLC) network, and the like. In a shared medium network, a network node mainly sends a packet in a broadcast manner, and the network node may function as a destination end node to receive a packet, and may also function as a relay node to forward a packet. For example, when a first relay node forwards a packet to a second relay node, the second relay node may forward the packet back to the first relay node, and therefore a single relay node may receive a large quantity of repeated packets. Consequently, one packet is repeatedly processed for a plurality of times, increasing network overheads.

In an existing wireless sensor network, a network node usually determines, based on a sequence number in a packet header, whether a received packet is a repeated packet. Specifically, one entry is set in each relay node. An item of the entry is <source address, sequence number>, and the source address is an address of a source end node. There are two recording manners for an entry. In one manner, source addresses and sequence numbers of all new packets received by a relay node are successively recoded in an entry, and when receiving a packet, the relay node can the packet is less than or equal to the sequence number that is in the entry and that is corresponding to the source address of the packet, determine that the packet is a repeated packet.

However, the shared medium networks such as the wireless sensor network and the power line communication network are characterized by a large networking scale, a large quantity of network nodes, and a limited storage capability of a network node. When network communication is relatively frequent and there are excessive network nodes, regardless of the first recording manner for an entry or the second recording manner for an entry, overflow is very likely to occur in an entry in a relay node, and therefore it cannot be determined whether a subsequent packet is a repeated packet. Consequently, in large-scale networking, reliability in determining a repeated packet based on entries in the two recording manners is relatively low. US 2015/0023213 A1 discloses a communication method used in a network including a plurality of nodes, and in particular involves storing a TTL value for a first node apparatus in a cluster, receiving a first packet including a first sequence number and a second packet including a second sequence number, judging whether a first sequence number and a second match decrementing the stored TTL value when a match exits, and separating a first mode apparatus from the cluster. TTL value for it becomes equal to or smaller than a prescribed value.

### SUMMARY

To resolve a prior-art problem of relatively low reliability in determining a repeated packet in large-scale networking, this application provides a packet transmission method and apparatus. The technical solutions are as follows:

This application provides a shared medium network. The shared medium network may include a plurality of network nodes, and each of the plurality of network nodes has a different function during packet transmission. Generally, a network node that generates and sends a packet may be referred to as a source end node, a network node that receives and forwards the packet may be referred to as a relay node, and a destination network node to which the packet is transmitted may be referred to as a destination end node. In actual application, in different packet transmission scenarios, a network node may function as a source end node, a relay node, and a destination end node.

According to a first aspect, this application provides a packet transmission method, used for a first network node in a shared medium network. The shared medium network includes at least two broadcast domains, each of the at least two broadcast domains includes at least two network nodes, and packet identity (ID) numbers each including a variable packet sequence number m and a domain number n that uniquely identifies a broadcast domain in which the network node is located used by all network nodes in a first broadcast domain to identify packets are the same at a same moment and are different from a packet ID number used by a network node in another broadcast domain to identify a packet. The first broadcast domain is any broadcast domain in the shared medium network, and the first network node is any network node in the first broadcast domain. The method includes: broadcasting a first ID sending request in the first broadcast domain, where the first ID sending request is used to request to send specified information and includes a first ID number, and the first ID number is a packet ID number used by each network node in the first broadcast domain at a current moment to identify a packet; when receiving, within a preset time period, no ID sending request sent by another network node, sending a first packet to a second network node, where the first packet includes the first ID number, and the another network node is a node in the first broadcast domain other than the first network node; and after sending the first packet to the second network node, updating the ID number in synchronization with the another network node in the first broadcast domain, to obtain a second ID number, where the second ID number and the first ID number meet a preset change rule, and the change rule is a monotonically increasing rule or a monotonically decreasing rule, wherein the first broadcast domain is a one-hop broadcast domain and the another network node in the first broadcast domain detects the packet ID number of the first network node through listening.

It should be noted that when no ID sending request sent by the another network node is received within the preset time period, it indicates that in a current time period, the another network node in the first broadcast domain does not need to send a packet, and the first network node can send the first packet to the second network node. This can ensure that only one packet is sent within a same time period in a same broadcast domain.

In the solution described in this application, it can be ensured that only one network node in the first broadcast domain sends a packet in the preset time period, to avoid a conflict between packet IDs of packets sent by different network nodes in a same broadcast domain. In addition, a relay node only needs to record one buffer entry for one broadcast domain, without recording one buffer entry for each network node in the shared medium network. This reduces power consumption of the relay node, and resolves a problem of a limited storage capability of the relay node.

Optionally, the first ID sending request is used to request to send specified information, and the packet transmission method further includes:
when receiving, within the preset time period, an ID sending request sent by the another network node, comparing a sending priority of the first network node with a sending priority of the another network node; and when the sending priority of the first network node is higher than the sending priority of the another network node, sending the first packet to the second network node; or when the sending priority of information, and the packet transmission method further includes:
when receiving, within the preset time period, an ID sending request sent by the another network node, comparing a sending priority of the first network node with a sending priority of the another network node; and when the sending priority of the first network node is higher than the sending priority of the another network node, sending the first packet to the second network node; or when the sending priority of the first network node is lower than the sending priority of the another network node, broadcasting a second ID sending request after a preset backoff time period, where the second ID sending request is used to request to send the specified information, the second ID sending request includes a second ID number, and the second ID number is an ID number synchronously updated by the first network node after the another network node sends a packet.

It should be noted that after the preset backoff time period, the another network node whose priority is higher at a previous moment has sent the packet. The another network node updates an ID number after sending the packet, and the first network node updates a packet ID number of the first network node after detecting, through listening, that the another network node sends the packet. When the first network node broadcasts the second ID sending request, a packet ID number in the second ID sending request is the second ID number synchronously updated by the first network node after the another network node sends the packet. Therefore, it can be ensured that there are no packets whose packet ID numbers are the same in packets sent by all the network nodes in the first broadcast domain.

Optionally, the broadcasting a first ID sending request in the first broadcast domain may include: repeatedly broadcasting the first ID sending request in the first broadcast domain for k times, where k is a preset value, and is greater than or equal to 2.

It should be noted that the first network node repeatedly broadcasts the first ID sending request in the first broadcast domain for a plurality of times, to avoid a case in which another network node does not receive the first ID sending request due to a packet loss in a transmission process of the first ID sending request, thereby ensuring that all other network nodes in the first broadcast domain receive a signal indicating that the first network node is to send a packet.

Optionally, each ID sending request includes a quantity of request times, and the comparing a sending priority of the first network node with a sending priority of the another network node includes:
comparing a first quantity of request times with a second quantity of request times, where the first quantity of request times is a quantity of request times in an ID sending request broadcast by the another network node, and the second quantity of request times is a quantity of request times in an ID sending request broadcast by the first network node; and when the first quantity of request times is greater than the second quantity of request times, determining that the sending priority of the first network node is lower than the sending priority of the another network node; or when the first quantity of request times is less than the second quantity of request times, determining that the sending priority of the first network node is higher than the sending priority of the another network node.

Optionally, each ID sending request may further include a Media Access Control (Media Access Control, MAC) address, and the comparing a sending priority of the first network node with a sending priority of the another network node further includes:
when the first quantity of request times is equal to the second quantity of request times, comparing a value of a MAC address of the another network node with a value of a MAC address of the first network node; and when the value of the MAC address of the another network node meets a preset comparison rule, determining that the sending priority of the first network node is lower than the sending priority of the another network node; or when the value of the MAC address of the another network node does not meet a preset comparison rule, determining that the sending priority of the first network node is higher than the sending priority of the another network node, where the preset comparison rule includes: the value of the MAC address of the another network node is greater than the value of the MAC address of the first network node, or the value of the MAC address of the another network node is less than the value of the MAC address of the first network node.

It should be noted that when a network node broadcasts an ID sending request in a broadcast domain, the network node needs to update a quantity of request times in the ID sending request for a same packet after each backoff time period.

For example, when the first network node needs to send the first packet, the first network node broadcasts the first ID sending request in the first broadcast domain. The first ID sending request is an ID sending request broadcast by the first network node for the first time, and a quantity of request times that is included in the first ID sending request is 1. It is assumed that a sixth network node (the sixth network node is any one of other network nodes) needs to send a second packet within the preset time period, and therefore the sixth network node broadcasts a third ID sending request in the first broadcast domain. A quantity of request times that is included in the third ID sending request is 2. It indicates that the sixth network node has broadcast, in the first broadcast domain at a previous moment, an ID sending request for sending the second packet. Therefore, a sending priority of the sixth network node is greater than the sending priority of the first network node. After the preset backoff time period, the first network node broadcasts the second ID sending request in the first broadcast domain. In this case, a quantity, of times of requesting to send the first packet, included in the second ID sending request is 2.

Optionally, the packet transmission method further includes: a packet ID number of each network node includes a variable packet sequence number and a domain number that is used to uniquely identify a broadcast domain in which the network node is located; and the updating the ID number in synchronization with the another network node in the first broadcast domain, to obtain a second ID number includes:
changing a packet sequence number in the first ID number to obtain the second ID number, so that a changed packet sequence number and the unchanged packet sequence number meet the change rule, where the second ID number includes a first domain number and the changed packet sequence number.

It should be noted that each broadcast domain includes one master node, and the master node is configured to manage a node in a broadcast domain in which the master node is located; and before the broadcasting an ID sending request in the first broadcast domain, the method further includes:
receiving an ID initialization instruction sent by a first master node, where the ID initialization instruction includes the first domain number and an initial sequence number, and the first master node is a master node in the first broadcast domain; based on the ID initialization instruction, setting a packet sequence number of the first network node to the initial sequence number, and generating an initial ID number, where the initial ID number includes the first domain number and the initial sequence number; starting a countdown at a generation moment of the initial ID number; and when the countdown ends, resetting the packet sequence number of the first network node to the initial sequence number.

It should be noted that the first network node starts a countdown at the generation moment of the initial ID number; and when the countdown ends, resets the packet sequence number of the first network node to the initial sequence number, and restarts a countdown. In other words, duration of the countdown is a life cycle of a packet ID. For example, a keep-alive timer may be disposed in the first network node, and a time-to-live of the keep-alive timer may be one minute. When the time-to-live of the keep-alive timer expires, the packet sequence number of the first network node is reset to the initial sequence number, and the keep-alive timer is restarted, to complete a periodic update of the packet sequence number, thereby avoiding overflow of the packet sequence number. It should be noted that all network nodes in the shared medium network synchronously update packet sequence numbers, and empty content out of buffer entries of all the network nodes when the network nodes update the packet sequence numbers.

Optionally, the initial sequence number is 0, the change rule may be the monotonically increasing rule, the changed packet sequence number is equal to the unchanged packet sequence number plus x, and x is greater than or equal to 1; or the initial sequence number is M, the change rule may be the monotonically decreasing rule, the changed packet sequence number is equal to the unchanged packet sequence number minus x, and x is greater than or equal to 1.

In another packet transmission scenario, the first network node may further function as a relay node.

Optionally, when the change rule is the monotonically increasing rule, the method further includes:
receiving a third packet sent by a third network node, where a packet ID number of the third packet includes a third domain number and a third packet sequence number; when the third domain number is recorded in a buffer entry of the first network node, obtaining a target packet sequence number that is in the buffer entry and that is corresponding to the third domain number, where packet ID numbers of latest packets are recorded in the buffer entry, and the latest packets are latest packets, in packets received by the first network node from a plurality of broadcast domains, from all the broadcast domains; determining whether the third packet sequence number is greater than the target packet sequence number; and when the third packet sequence number is not greater than the target packet sequence number, determining that the third packet is a repeated packet, and discarding the third packet; or when the packet sequence number of the third packet is greater than the target packet sequence number, forwarding the third packet, and updating the target packet sequence number in the buffer entry to the third packet sequence number.

Optionally, when the change rule is the monotonically decreasing rule, the method further includes:
receiving a third packet sent by a third network node, where a packet ID number of the third packet includes a third domain number and a third packet sequence number; when the third domain number is recorded in a buffer entry of the first network node, obtaining a target packet sequence number that is in the buffer entry and that is corresponding to the third domain number, where packet ID numbers of latest packets are recorded in the buffer entry, and the latest packets are latest packets, in packets received by the first network node from a plurality of broadcast domains, from all the broadcast domains; determining whether the third packet sequence number is less than the target packet sequence number; and when the third packet sequence number is not less than the target packet sequence number, determining that the third packet is a repeated packet, and discarding the third packet; or when the packet sequence number of the third packet is less than the target packet sequence number, forwarding the third packet, and updating the target packet sequence number in the buffer entry to the third packet sequence number.

Optionally, each broadcast domain includes one cross-domain relay node, and the cross-domain relay node is located in at least two broadcast domains; and before the broadcasting an ID sending request in the first broadcast domain, the method further includes:
determining the master node and a cross-domain relay node in the first broadcast domain.

According to a second aspect, this application provides a packet transmission apparatus, configured to perform the packet transmission method provided in the first aspect.

The packet transmission apparatus provided in the second aspect may include a processor and a network interface.

The processor includes one or more processing cores. The processor executes various function applications and processes data by running a software program and a unit.

There may be a plurality of network interfaces, and the network interface is configured to communicate with another storage device or network device.

Optionally, the network device further includes components such as a memory and a bus. Both the memory and the network interface are connected to the processor by using the bus.

The memory may be configured to store a software program and a unit. Specifically, the memory may store an operating system and an application program unit required for at least one function. The operating system may be an operating system such as a real-time operating system (Real Time eXecutive, RTX), LINUX, UNIX, WINDOWS, or OS X. The processor is configured to execute program code, to implement the method in the first aspect.

Technical effects obtained in the second aspect are similar to technical effects obtained by using the corresponding technical means in the first aspect, and details are not described herein again.

The technical solutions provided in this application bring the following beneficial effects:

According to the packet transmission method and apparatus provided in this application, when the first network node in the first broadcast domain needs to send the first packet, the first network node first broadcasts the ID sending request. When receiving no ID sending request broadcast by the another network node, the first network node sends the first packet to the second network node, and packet IDs of all the network nodes in the first broadcast domain are updated. This ensures that only one network node in the first broadcast domain can send one packet in the preset time period, to avoid a phenomenon that determining cannot be performed because packet IDs carried in packets simultaneously sent by different network nodes in a same broadcast domain are the same. In addition, the shared medium network includes the at least two broadcast domains, and in one packet life cycle, all packet IDs of packets sent by network nodes in a same broadcast domain are different from each other. Therefore, compared with the prior art in which a relay node needs to establish one entry for each network node in the shared medium network, in the embodiments of the present invention, the relay node only needs to establish a maximum of an entry corresponding to each broadcast domain. This decreases memory that needs to be occupied by a buffer entry, reduces power consumption of the relay node, and improves reliability in determining a repeated packet.

The invention is defined by the appended claims. Embodiments, which do not fall within the scope of the appended set of claims are to be interpreted as background information, useful for understanding the invention.

### BRIEF DESCRIPTION OF DRAWINGS

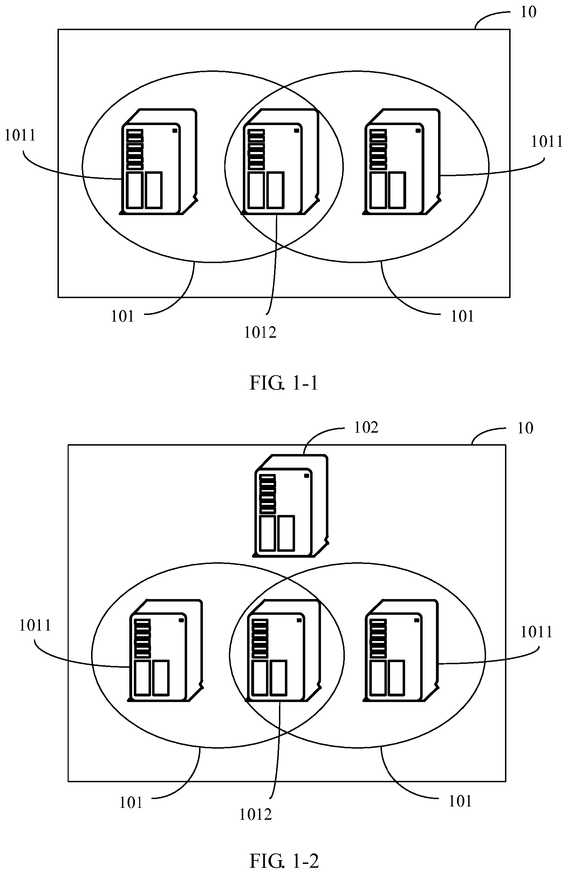

FIG. 1-1 is a schematic structural diagram of a shared medium network in a packet transmission method according to an embodiment of the present invention;
FIG 1-2 is a schematic structural diagram of another shared medium network in a packet transmission method according to an embodiment of the present invention;
FIG 2-1A and FIG 2-1B are a flowchart of a packet transmission method according to an embodiment of the present invention;
FIG 2-2 is a flowchart of a method for performing ID initialization by a network node according to an embodiment of the present invention;

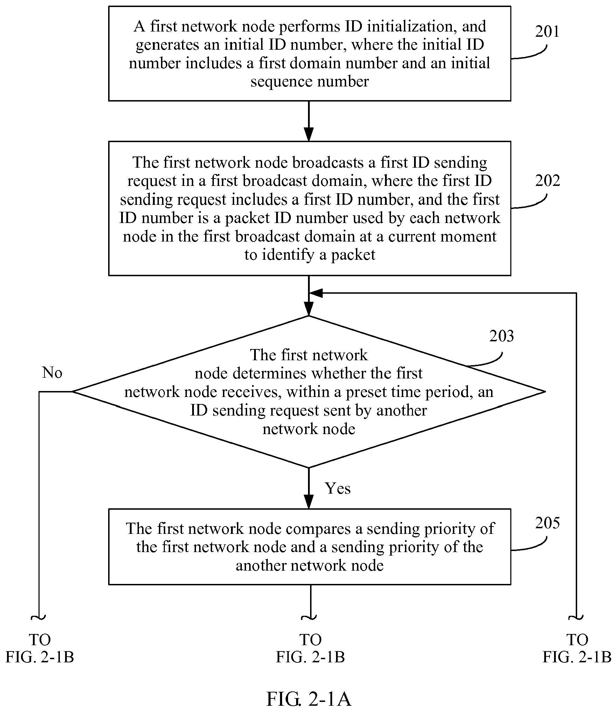

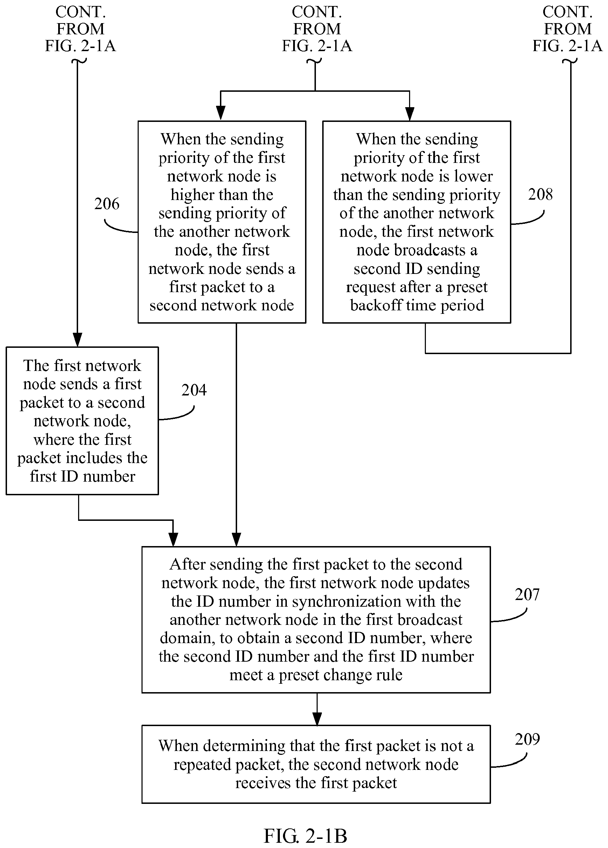

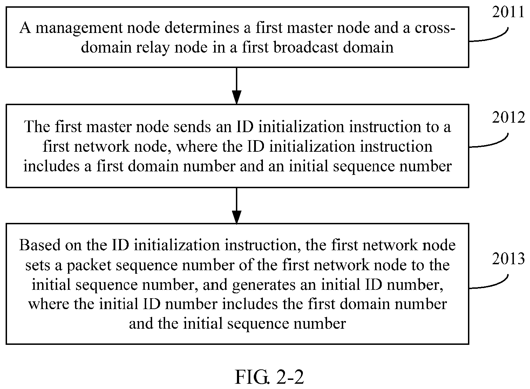

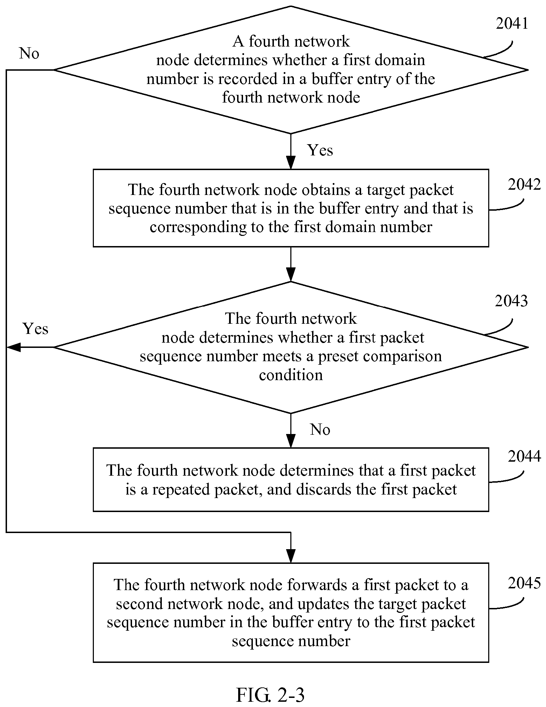

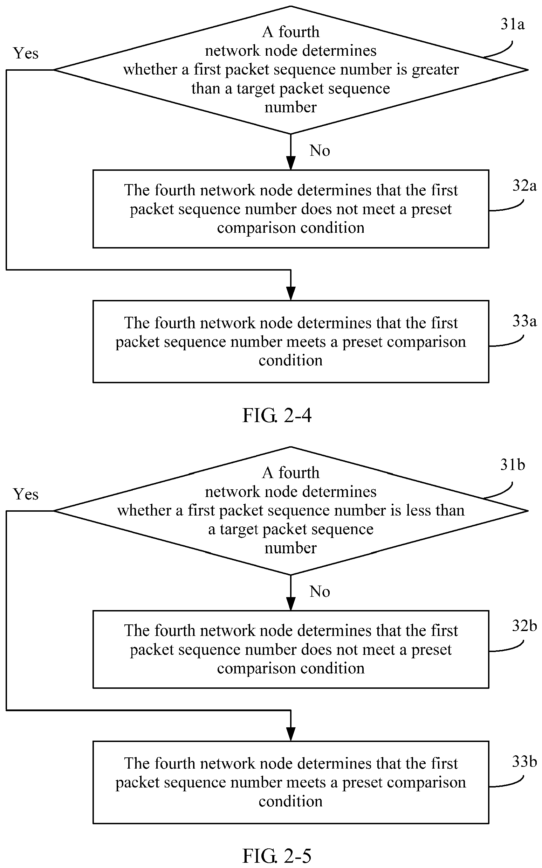

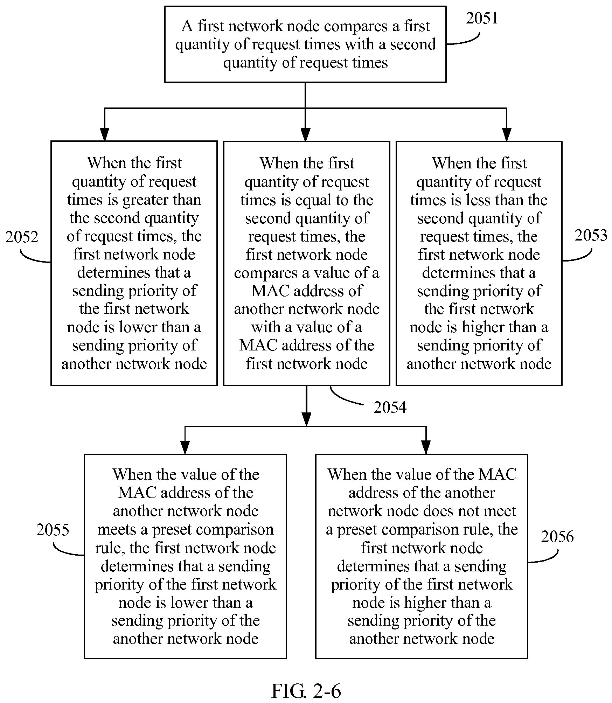

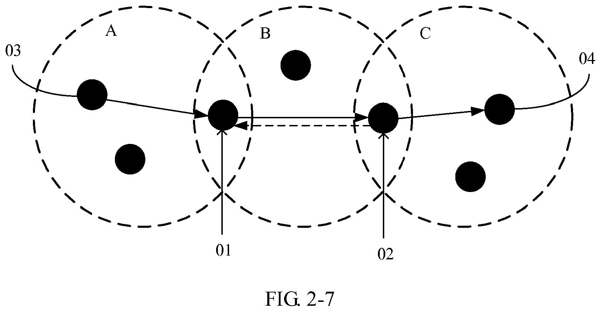

FIG 2-3 is a flowchart of a method for forwarding a packet by a network node according to an embodiment of the present invention;
FIG 2-4 is a flowchart of a method for determining whether a packet sequence number meets a preset comparison condition according to an embodiment of the present invention;
FIG 2-5 is a flowchart of another method for determining whether a packet sequence number meets a preset comparison condition according to an embodiment of the present invention;
FIG. 2-6 is a flowchart of a method for comparing priorities of network nodes according to an embodiment of the present invention;
FIG 2-7 is a schematic structural diagram of still another shared medium network in a packet transmission method according to an embodiment of the present invention;

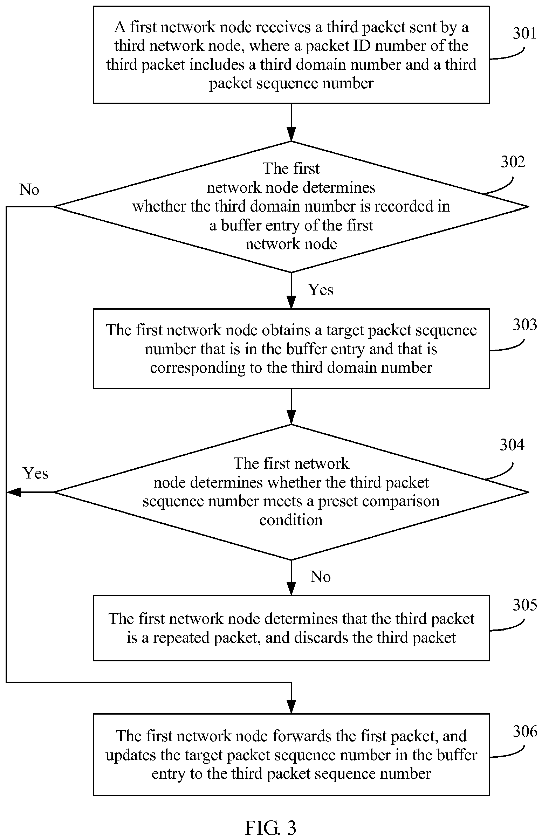

FIG 3 is a flowchart of a method for forwarding a packet by a network node according to an embodiment of the present invention;

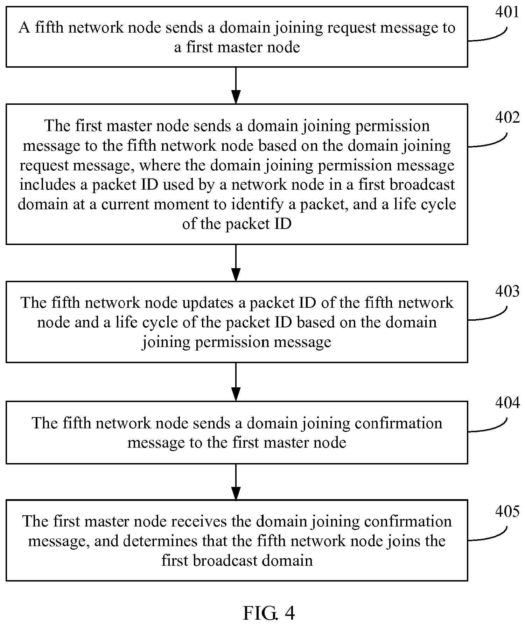

FIG 4 is a flowchart of a method for joining a broadcast domain by a new network node according to an embodiment of the present invention;

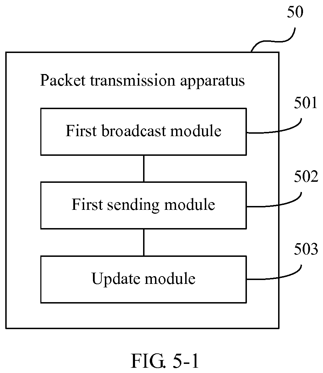

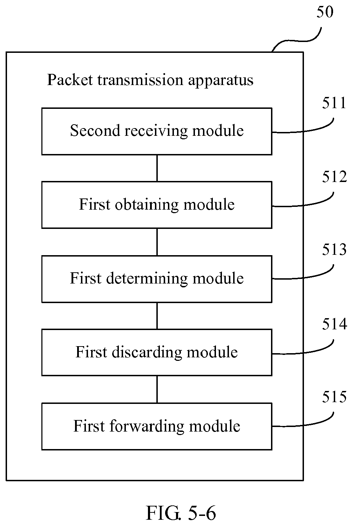

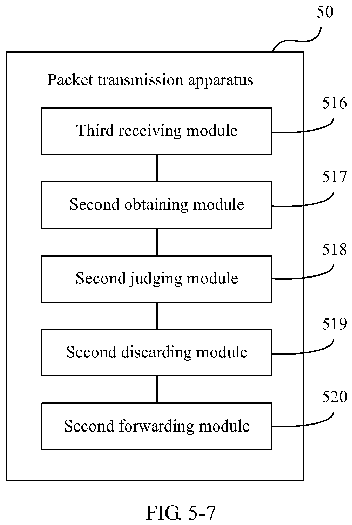

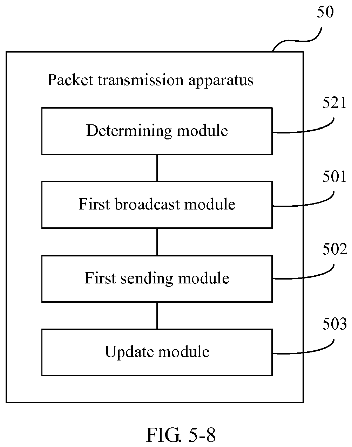

FIG 5-1 is a schematic structural diagram of a packet transmission apparatus according to an embodiment of the present invention;

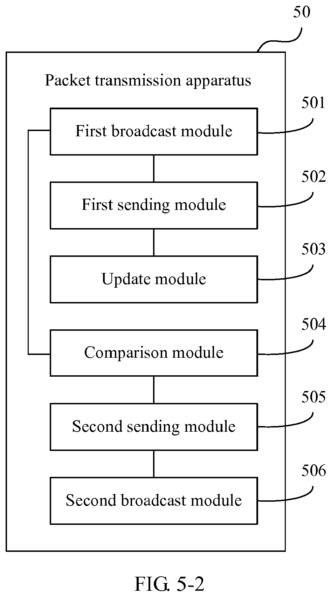

FIG 5-2 is a schematic structural diagram of another packet transmission apparatus according to an embodiment of the present invention;

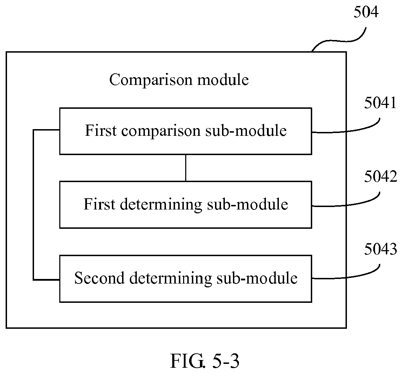

FIG 5-3 is a schematic structural diagram of a comparison module according to an embodiment of the present invention;

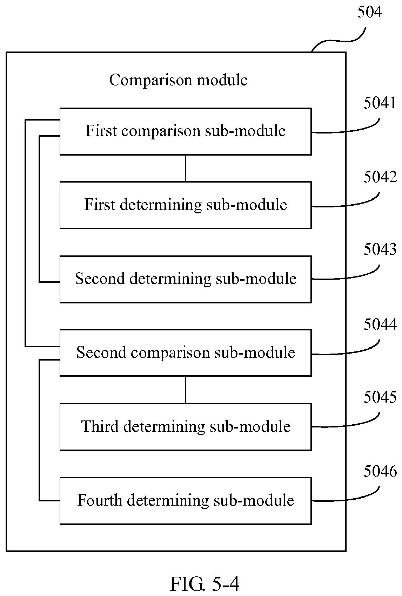

FIG. 5-4 is a schematic structural diagram of another comparison module according to an embodiment of the present invention;

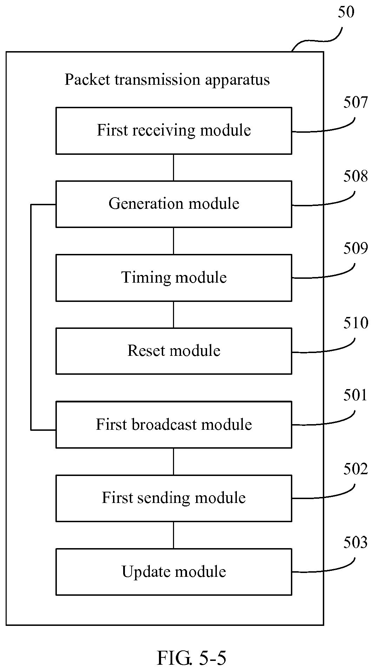

FIG. 5-5 is a schematic structural diagram of still another packet transmission apparatus according to an embodiment of the present invention;
FIG. 5-6 is a schematic structural diagram of a packet transmission apparatus according to another embodiment of the present invention;
FIG. 5-7 is a schematic structural diagram of another packet transmission apparatus according to another embodiment of the present invention;
FIG. 5-8 is a schematic structural diagram of still another packet transmission apparatus according to another embodiment of the present invention;

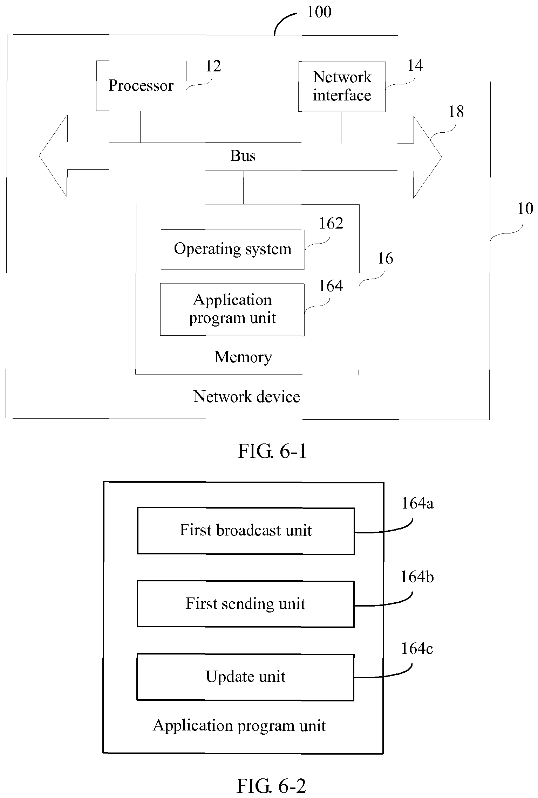

FIG. 6-1 is a schematic structural diagram of a network device in an embodiment shown in FIG. 1-2;
FIG. 6-2 is a schematic diagram of a first application program unit in an embodiment shown in FIG. 1-2;

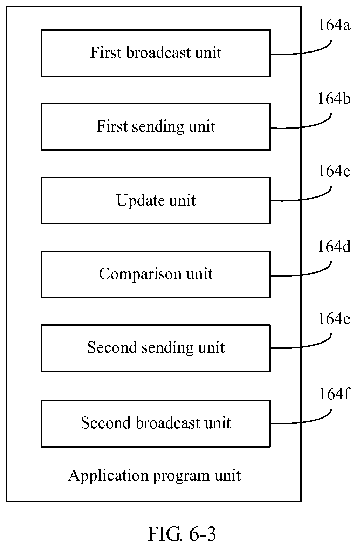

FIG. 6-3 is a schematic diagram of a second application program unit in an embodiment shown in FIG. 1-2;

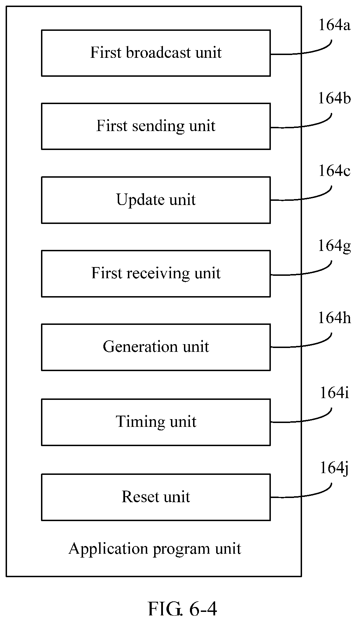

FIG. 6-4 is a schematic diagram of a third application program unit in an embodiment shown in FIG. 1-2;

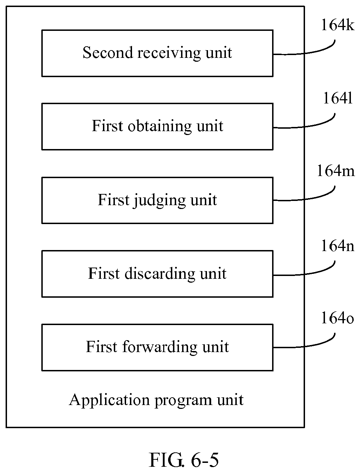

FIG. 6-5 is a schematic diagram of a fourth application program unit in an embodiment shown in FIG. 1-2; and

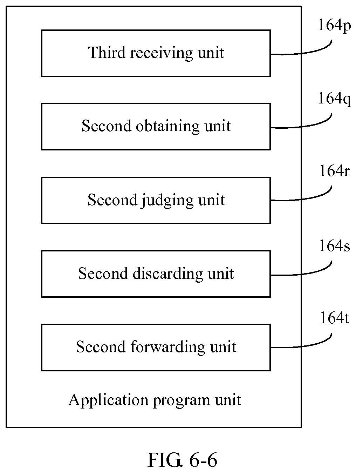

FIG. 6-6 is a schematic diagram of a fifth application program unit in an embodiment shown in FIG. 1-2.

### DESCRIPTION OF EMBODIMENTS

To make the objectives, technical solutions, and advantages of this application clearer, the following further describes the implementations of this application in detail with reference to the accompanying drawings.

FIG. 1-1 is a schematic structural diagram of a shared medium network 10 in a packet transmission method according to an embodiment of the present invention. Referring to FIG. 1-1, the shared medium network 10 may include a plurality of network nodes 101, and each of the plurality of network nodes has a different function during packet transmission. Generally, a network node that generates and sends a packet may be referred to as a source end node, a network node that receives and forwards the packet may be referred to as a relay node, and a destination network node to which the packet is transmitted may be referred to as a destination end node. In actual application, in different packet transmission scenarios, a network node may function as a source end node, a relay node, and a destination end node. In this embodiment of the present invention, the shared medium network 10 may include at least two broadcast domains 101, each broadcast domain 101 includes at least two network nodes, and the at least two network nodes may include a master node 1011 and a cross-domain relay node 1012.

For example, the shared medium network provided in this embodiment of the present invention may be a wireless sensor network, and correspondingly, the network node may be a wireless sensor in the wireless sensor network; or the shared medium network may be a power line communication network, and correspondingly, the network node may be an electricity meter in the power line communication network.

Optionally, as shown in FIG. 1-2, the shared medium network 10 provided in this embodiment of the present invention may further include a management node 102. The management node 102 is an independent node configured to perform centralized node management in the shared medium network 10, and does not belong to any broadcast domain 101. The management node 102 mainly performs network configuration and network management for each node. For example, when the shared medium network 10 is a wireless sensor network, the management node may be a manager in the wireless sensor network; or when the shared medium network 10 is a power line communication network, the management node may be a data concentrator in the power line communication network.

It should be noted that in this embodiment of the present invention, all broadcast domains in the shared medium network are one-hop broadcast domains (One-hop broadcast domain). In other words, a packet may arrive through one hop between any two network nodes in a same broadcast domain during packet transmission. Specifically, each network node may listen to neighboring network nodes (the neighboring network node is a network node at which a packet can arrive through one hop when the network node transmits the packet), to voluntarily form some one-hop broadcast domains. Therefore, a plurality of broadcast domains may be formed in the shared medium network through neighbor discovery by each network node.

It should be noted that two tables are set in each network node provided in this embodiment of the present invention, and are separately shown as Table 1 and Table 2. Table 1 is a schematic table of an ID number used by each network node to identify a packet. The packet ID number includes a variable packet sequence number m and a domain number n that uniquely identifies a broadcast domain in which the network node is located.

**Table 1**

| **Domain number** | **Packet sequence number** |
|---|---|
| n | m |

Table 2 is a schematic table of a buffer entry of each network node. Packet ID numbers of latest packets arc recorded in the buffer entry, and the latest packets arc latest packets, in packets received by the network node from a plurality of broadcast domains, from all the broadcast domains. Assuming that there are N broadcast domains in the shared medium network, the buffer entry of each network node stores a maximum of N entries. As shown in FIG. 2, assuming that 1 to N are domain numbers corresponding to all the broadcast domains, m1 to mN are packet sequence numbers of latest packets received by the network node from all the broadcast domains at a current moment. It is assumed that a domain number corresponding to a first broadcast domain is 1, a target network node is any network node in the shared medium network, and a packet sequence number that is of a packet sent by a network node in the first broadcast domain and that is stored in the target network node at a previous moment is n1. When the target network node receives, at a current moment, a packet sent by a network node in the first broadcast domain, assuming that a packet sequence number of the packet is m1, the target network node changes, to m1, the packet sequence number n1 that is in a buffer entry and that is corresponding to the domain number 1.

**Table 2**

| **Domain number** | **Packet sequence number** |
|---|---|
| 1 | m1 |
| 2 | m2 |
| ... | ... |
| N | mN |

Optionally, the domain number and the packet sequence number each can occupy a maximum of two-byte memory of the network node. The network node only needs to record one entry for one broadcast domain, without recording one entry for each network node in the shared medium network, so that occupied memory of the network node can be decreased by two to three orders of magnitude, thereby resolving a problem of a limited storage capability of the network node.

In an embodiment of the present invention, an example in which a packet transmission method is used for a first network node in a shared medium network is used for description. It is assumed that the shared medium network can include at least two broadcast domains, each of the at least two broadcast domains includes at least two network nodes, and packet ID numbers used by all network nodes in a first broadcast domain to identify packets are the same at a same moment and are different from a packet ID number used by a network node in another broadcast domain to identify a packet. The first broadcast domain is any broadcast domain in the shared medium network, and the first network node is any network node in the first broadcast domain. Optionally, the shared medium network may further include a management node. Correspondingly, FIG. 2-1A and FIG. 2-1B are a flowchart of a packet transmission method according to an embodiment of the present invention. As shown in FIG. 2-1A and FIG. 2-1B, the packet transmission method is applied to the shared medium network shown in FIG. 1-2. In this embodiment of the present invention, assuming that a first network node forwards a packet to a second network node by using a fourth network node, the packet transmission method includes the following steps.

In step 201, the first network node performs ID initialization, and generates an initial ID number. The initial ID number includes a first domain number and an initial sequence number.

Specifically, as shown in FIG. 2-2, a process in which the first network node performs ID initialization includes the following steps.

In step 2011, a management node determines a first master node and a cross-domain relay node in a first broadcast domain.

Optionally, after obtaining an entire network topology, according to a preset selection rule, the management node may select the first master node (for example, randomly select a master node or select a network node with a strongest signal in the first broadcast domain as the master node) for the first broadcast domain. Optionally, the first master node may be a network node with a strongest signal in the first broadcast domain, and the master node is configured to manage a network node in the first broadcast domain. The first broadcast domain includes at least one cross-domain network node, and the cross-domain network node is located in at least two broadcast domains. According to a preset specification rule, the management node may specify (for example, randomly specify) one of the at least one cross-domain network node as the cross-domain relay node. The cross-domain relay node is a unique cross-domain relay node for packet transmission between a network node in the first broadcast domain and a network node in a broadcast domain in the at least two broadcast domains other than the first broadcast domain. For example, it is assumed that the management node sets a cross-domain network node located in the first broadcast domain and a second broadcast domain as a cross-domain relay node of the first broadcast domain and the second broadcast domain. When packet transmission is performed between a network node in the first broadcast domain and a network node in the second broadcast domain, the cross-domain network node is a unique cross-domain relay node in a packet transmission process. In other words, the cross-domain network node is disposed on all packet transmission paths between the network node in the first broadcast domain and the network node in the second broadcast domain.

It should be noted that in a packet transmission process, when an original first master node is faulty and exits from the first broadcast domain, the management node may select a new network node in the first broadcast domain as the first master node according to a preset update rule. When an original cross-domain relay node is faulty and exits from the first broadcast domain, if there is another cross-domain network node, the management node may select the cross-domain network node as a new cross-domain relay node.

In step 2012, the first master node sends an ID initialization instruction to the first network node. The ID initialization instruction includes the first domain number and the initial sequence number.

For example, after determining the first master node in the first broadcast domain, the management node may send the first domain number to the first master node, and the first master node sends the ID initialization instruction to the first network node.

It should be noted that when a network node in the first broadcast domain sends a packet, a packet sequence number in a packet ID of the first network node is changed according to a preset change rule. Optionally, the change rule may be a monotonically increasing rule or a monotonically decreasing rule. When the change rule is the monotonically increasing rule, the initial sequence number may be set to 0. When the change rule is the monotonically decreasing rule, the initial sequence number may be set to M, and M is a relatively large positive integer. For example, M maybe 10⁵.

In step 2013, based on the ID initialization instruction, the first network node sets a packet sequence number of the first network node to the initial sequence number, and generates the initial ID number. The initial ID number includes the first domain number and the initial sequence number.

It should be noted that the first network node starts a countdown at a generation moment of the initial ID number; and when the countdown ends, resets the packet sequence number of the first network node to the initial sequence number, and restarts a countdown. In other words, duration of the countdown is a life cycle of a packet ID. For example, a keep-alive timer may be disposed in the first network node, and a time-to-live of the keep-alive timer may be one minute. When the time-to-live of the keep-alive timer expires, the packet sequence number of the first network node is reset to the initial sequence number, and the keep-alive timer is restarted, to complete a periodic update of the packet sequence number, thereby avoiding overflow of the packet sequence number. It should be noted that all network nodes in the shared medium network synchronously update packet sequence numbers, and empty content out of buffer entries of all the network nodes when the network nodes update the packet sequence numbers.

In step 202, the first network node broadcasts a first ID sending request in the first broadcast domain. The first ID sending request includes a first ID number, and the first ID number is a packet ID number used by each network node in the first broadcast domain at a current moment to identify a packet.

It should be noted that before sending a first packet, the first network node needs to broadcast the first ID sending request in the first broadcast domain. The first ID sending request is used to request to send specified information. For example, the first network node needs to send the first packet, and the first ID sending request includes a quantity of times of requesting to send the first packet. The first ID sending request may include the first ID number. Optionally, the first ID sending request may further include a MAC address of the first network node and the like.

In this embodiment of the present invention, a quantity of times the first network node broadcasts the first ID sending request is not limited, provided that the first network node broadcasts the first ID sending request in the first broadcast domain at least once. Optionally, the first network node may repeatedly broadcast the first ID sending request in the first broadcast domain for k times, where k is a preset value, and k≥2. The first network node repeatedly broadcasts the first ID sending request in the first broadcast domain for a plurality of times, to avoid a case in which another network node does not receive the first ID sending request due to a packet loss in a transmission process of the first ID sending request, thereby ensuring that all other network nodes in the first broadcast domain receive a signal indicating that the first network node is to send a packet. For example, when repeatedly broadcasting the first ID sending request, the first network node may broadcast the ID sending request in the first broadcast domain every 5 ms (millisecond) within a preset time period.

In step 203, the first network node determines whether the first network node receives, within a preset time period, an ID sending request sent by another network node; and when receiving, within the preset time period, no ID sending request sent by the another network node, performs step 204; or when receiving, within the preset time period, an ID sending request sent by the another network node, performs step 205.

In this embodiment of the present invention, the another network node is a node in the first broadcast domain other than the first network node.

Optionally, duration t of the preset time period may meet: 10 ms≤t≤40 ms. A start moment of the preset time period is a moment at which the first network node completes broadcasting of the ID sending request. For example, it is assumed that t=30 ms. When receiving, within 30 ms after the broadcasting of the ID sending request is completed, no ID sending request sent by the another network node, the first network node performs step 204; or when receiving, within 30 ms after the broadcasting of the ID sending request is completed, an ID sending request sent by the another network node, the first network node performs step 205.

In step 204, the first network node sends a first packet to the second network node. The first packet includes the first ID number.

It should be noted that when no ID sending request sent by the another network node is received within the preset time period, it indicates that in a current time period, the another network node in the first broadcast domain does not need to send a packet, and the first network node can send the first packet to the second network node. This can ensure that only one packet is sent within a same time period in a same broadcast domain.

Optionally, the second network node may be a network node in the first broadcast domain, or may be a network node in a broadcast domain other than the first broadcast domain. When the second network node is a network node in the first broadcast domain, because all broadcast domains provided in this embodiment of the present invention are one-hop broadcast domains, when the first network node sends the first packet to the second network node, the first packet does not need to be forwarded by using a relay node. When the second network node is a network node in another broadcast domain, when the first network node sends the first packet to the second network node, optionally, the first network node may forward the packet to the second network node by using the fourth network node.

Specifically, FIG. 2-3 shows a process in which the fourth network node forwards a packet. As shown in FIG. 2-3, the process includes the following steps.

In step 2041, the fourth network node determines whether the first domain number is recorded in a buffer entry of the fourth network node; and when the first domain number is recorded in the buffer entry of the fourth network node, performs step 2042; or when the first domain number is not recorded in the buffer entry of the fourth network node, performs step 2045.

It should be noted that the fourth network node is a relay node between the first network node and the second network node, packet ID numbers of latest packets are recorded in the buffer entry of the fourth network node, and the latest packets are latest packets, in packets received by the fourth network node from a plurality of broadcast domains, from all the broadcast domains. Detecting whether the first domain number is recorded in the buffer entry of the fourth network node is detecting whether the fourth network node receives a packet sent by a network node in the first broadcast domain.

In step 2042, the fourth network node obtains a target packet sequence number that is in the buffer entry and that is corresponding to the first domain number.

For example, it is assumed that Table 2 is a schematic table of the buffer entry of the fourth network node. Referring to Table 2, the target sequence number corresponding to the first domain number is m1. In other words, up to now, a packet sequence number of a latest packet that is sent by a network node in the first broadcast domain and that is received by the fourth network node is m1.

In step 2043, the fourth network node determines whether a first packet sequence number meets a preset comparison condition; and when the first packet sequence number does not meet the preset comparison condition, performs step 2044; or when the first packet sequence number meets the preset comparison condition, performs step 2045.

On one hand, as shown in FIG. 2-4, when the packet sequence number change rule is the monotonically increasing rule, a process in which the fourth network node determines whether the first packet sequence number meets the preset comparison condition includes the following steps.

In step 31a, the fourth network node determines whether the first packet sequence number is greater than the target packet sequence number; and when the first packet sequence number is not greater than the target packet sequence number, performs step 32a; or when the first packet sequence number is greater than the target packet sequence number, performs step 33a.

Optionally, the monotonically increasing rule may be a linear monotonically increasing rule, or may be a non-linear monotonically increasing rule. It should be noted that when the packet sequence number change rule is the linear monotonically increasing rule, after a network node in the first broadcast domain sends a packet at a previous moment, variable packet sequence numbers in packet ID numbers of all the network nodes in the first broadcast domain are increased by x, and x is a fixed value. In other words, the packet sequence number of the first packet sent by the first network node at a current moment is greater than a packet sequence number of the packet sent by the network node in the first broadcast domain at the previous moment. Therefore, the fourth network node can determine whether the first packet is a repeated packet by determining whether the packet sequence number of the first packet is greater than the target packet sequence recorded in the buffer entry of the fourth network node.

For example, it is assumed that the packet sequence number of the first network node is 6 at the previous moment, and x=2. After the network node in the first broadcast domain sends a packet at the current moment, the packet sequence numbers of all the network nodes in the first broadcast domain are increased by 2, and the packet sequence number of the first network node is changed to 8.

In step 32a, the fourth network node determines that the first packet sequence number does not meet the preset comparison condition.

In step 33a, the fourth network node determines that the first packet sequence number meets the preset comparison condition.

On the other hand, as shown in FIG. 2-5, when the packet sequence number change rule is the monotonically decreasing rule, a process in which the fourth network node determines whether the first packet sequence number meets the preset comparison condition includes the following steps.

In step 31b, the fourth network node determines whether the first packet sequence number is less than the target packet sequence number; and when the first packet sequence number is not less than the target packet sequence number, performs step 32b; or when the first packet sequence number is less than the target packet sequence number, performs step 33b.

Optionally, the monotonically decreasing rule may be a linear monotonically decreasing rule, or may be a non-linear monotonically decreasing rule. It should be noted that when the packet sequence number change rule is the linear monotonically decreasing rule, after a network node in the first broadcast domain sends a packet at a previous moment, variable packet sequence numbers in packet ID numbers of all the network nodes in the first broadcast domain are decreased by x, and x is a fixed value. In other words, the packet sequence number of the first packet sent by the first network node at a current moment is less than a packet sequence number of the packet sent by the network node in the first broadcast domain at the previous moment. Therefore, the fourth network node can determine whether the first packet is a repeated packet by determining whether the packet sequence number of the first packet is less than the target packet sequence recorded in the buffer entry of the fourth network node.

For example, it is assumed that the packet sequence number of the first network node is 156 at the previous moment, and x=2. After the network node in the first broadcast domain sends a packet at the current moment, the packet sequence numbers of all the network nodes in the first broadcast domain are decreased by 2, and the packet sequence number of the first network node is changed to 154.

In step 32b, the fourth network node determines that the first packet sequence number does not meet the preset comparison condition.

In step 33b, the fourth network node determines that the first packet sequence number meets the preset comparison condition.

In step 2044, the fourth network node determines that the first packet is a repeated packet, and discards the first packet.

In step 2045, the fourth network node forwards the first packet to the second network node, and updates the target packet sequence number in the buffer entry to the first packet sequence number.

It should be noted that a MAC address of a destination end node is carried in the first packet sent by the first network node, and the fourth network node can determine, based on the first packet, whether the fourth network node is the destination end node. Because the MAC address of the destination end node that is carried in the first packet is a MAC address of the second network node, the fourth network node determines that the fourth network node is not the destination end node, and forwards the first packet to the second network node.

Optionally, when the first domain number corresponding to the first broadcast domain is recorded in the buffer entry of the fourth network node, the target packet sequence number corresponding to the first domain number is changed to the first packet sequence number.

Optionally, when an entry corresponding to the first domain number is not recorded in the buffer entry of the fourth network node, the first domain number and the first packet sequence number are obtained, and a new entry is inserted into the buffer entry, where the first domain number and the first packet sequence number are recorded in the entry.

In step 205, the first network node compares a sending priority of the first network node and a sending priority of the another network node.

Optionally, each ID sending request includes a quantity of request times. As shown in FIG. 2-6, a method, for comparing the sending priority of the first network node and the sending priority of the another network node, provided in this embodiment of the present invention includes the following steps.

In step 2051, the first network node compares a first quantity of request times with a second quantity of request times.

The first quantity of request times is a quantity of request times in an ID sending request broadcast by the another network node, and the second quantity of request times is a quantity of request times in an ID sending request broadcast by the first network node.

It should be noted that when a network node broadcasts an ID sending request in a broadcast domain, the network node needs to update a quantity of request times in the ID sending request for a same packet after each backoff time period.

In step 2052, when the first quantity of request times is greater than the second quantity of request times, the first network node determines that the sending priority of the first network node is lower than the sending priority of the another network node.

In step 2053, when the first quantity of request times is less than the second quantity of request times, the first network node determines that the sending priority of the first network node is higher than the sending priority of the another network node.

For example, when the first network node needs to send the first packet, the first network node broadcasts the first ID sending request in the first broadcast domain. The first ID sending request is an ID sending request broadcast by the first network node for the first time, and a quantity of request times that is included in the first ID sending request is 1. It is assumed that a sixth network node (the sixth network node is any one of other network nodes) needs to send a second packet within the preset time period, and therefore the sixth network node broadcasts a third ID sending request in the first broadcast domain. A quantity of request times that is included in the third ID sending request is 2. It indicates that the sixth network node has broadcast, in the first broadcast domain at a previous moment, an ID sending request for sending the second packet. Therefore, a sending priority of the sixth network node is greater than the sending priority of the first network node. After a preset backoff time period, the first network node broadcasts a second ID sending request in the first broadcast domain. In this case, a quantity, of times of requesting to send the first packet, included in the second ID sending request is 2.

In step 2054, when the first quantity of request times is equal to the second quantity of request times, the first network node compares a value of a MAC address of the another network node with a value of a MAC address of the first network node.

It should be noted that because an ID sending request sent by a network node may include a MAC address of the network node, the value of the MAC address of the another network node that broadcasts an ID sending request may be compared with the value of the MAC address of the first network node that broadcasts the ID sending request.

In step 2055, when the value of the MAC address of the another network node meets a preset comparison rule, the first network node determines that the sending priority of the first network node is lower than the sending priority of the another network node.

In step 2056, when the value of the MAC address of the another network node does not meet a preset comparison rule, the first network node determines that the sending priority of the first network node is higher than the sending priority of the another network node.

Optionally, the preset comparison rule may include: the value of the MAC address of the another network node is greater than the value of the MAC address of the first network node, or the value of the MAC address of the another network node is less than the value of the MAC address of the first network node. The MAC address of the network node may be represented by using 12-bit hexadecimal digits.

For example, when the first quantity of request times is equal to the second quantity of request times, the value of the MAC address of the another network node is compared with the value of the MAC address of the first network node, to determine a relationship between the priority of the another network node and the priority of the first network node. Assuming that a quantity of request times that is included in a third ID sending request broadcast by a sixth network node (the sixth network node is any one of other network nodes) is 1, and a quantity of request times that is included in the first ID sending request broadcast by the first network node is also 1, the value of the MAC address of the first network node may be compared with a value of a MAC address of the sixth network node. Assuming that the MAC address of the first network node is E87A-28B3-5A2D, and the MAC address of the second network node is E87A-28B3-5B3C, the value of the MAC address of the first network node is less than the value of the MAC address of the second network node. The relationship between the priority of the first network node and the priority of the another network node may be compared according to the preset comparison rule.

In step 206, when the sending priority of the first network node is higher than the sending priority of the another network node, the first network node sends a first packet to the second network node.

Optionally, the second network node may be a network node in the first broadcast domain, or may be a network node in a broadcast domain other than the first broadcast domain. When the second network node is a network node in the first broadcast domain, because all broadcast domains provided in this embodiment of the present invention are one-hop broadcast domains, when the first network node sends the first packet to the second network node, the first packet does not need to be forwarded by using a relay node. When the second network node is a network node in another broadcast domain, when the first network node sends the first packet to the second network node, optionally, the first network node may forward the packet to the second network node by using the fourth network node. Specifically, for a process in which the fourth network node forwards a packet, refer to the foregoing step 204, and details are not described herein again in this embodiment of the present invention.

In step 207, after sending the first packet to the second network node, the first network node updates the ID number in synchronization with the another network node in the first broadcast domain, to obtain a second ID number. The second ID number and the first ID number meet a preset change rule.

Optionally, the change rule may be a monotonically increasing rule or a monotonically decreasing rule.

It should be noted that the first network node updates the ID number in synchronization with the another network node in the first broadcast domain, to obtain the second ID number, in other words, a packet sequence number in the first ID number is changed to obtain the second ID number, so that a changed packet sequence number and the unchanged packet sequence number meet the change rule. The second ID number includes the first domain number and the changed packet sequence number. After the first network node sends the first packet to the second network node, the first network node updates a local packet ID number. Because the first broadcast domain is a one-hop broadcast domain, the another network node in the first broadcast domain can detect the packet ID number of the first network node through listening. When detecting, through listening, that the packet ID number of the first network node is updated, the another network node in the first broadcast domain updates a local packet ID number, so that an updated packet ID number is equal to an updated packet ID number of the first network node.

Optionally, the monotonically increasing rule may be a linear monotonically increasing rule, or may be a non-linear monotonically increasing rule. Optionally, when the change rule is the linear monotonically increasing rule, the first master node may set the initial sequence number to 0. In this case, the changed packet sequence number is equal to the unchanged packet sequence number plus x, where x is a fixed value, and x is greater than or equal to 1. For example, referring to step 31a, it is assumed that the packet sequence number in the first ID number is 6, and x=2. In this case, the updated packet sequence number is 8. In other words, a packet sequence number in the second ID number is 8.

Optionally, the monotonically decreasing rule may be a linear monotonically decreasing rule, or may be a non-linear monotonically decreasing rule. Optionally, when the change rule is the linear monotonically decreasing rule, the first master node may set the initial sequence number to a positive integer M. In this case, the changed packet sequence number is equal to the unchanged packet sequence number minus x, where x is a fixed value, and x is greater than or equal to 1. For example, referring to step 31b, it is assumed that the packet sequence number in the first ID number is 156, and x=2. In this case, the updated packet sequence number is 154. In other words, a packet sequence number in the second ID number is 154.

It should be noted that when the change rule is the monotonically decreasing rule, M needs to be set to a value that is large enough, to ensure that the changed packet sequence number is greater than 0 when the countdown ends.

In step 208, when the sending priority of the first network node is lower than the sending priority of the another network node, the first network node broadcasts a second ID sending request after a preset backoff time period, and then performs step 203.

The second ID sending request is used to request to send the specified information (namely, the first packet), the second ID sending request includes a second ID number, and the second ID number is an ID number synchronously updated by the first network node after the another network node sends a packet.

It should be noted that duration of the preset backoff time period is not limited in this embodiment of the present invention. Optionally, the duration of the preset backoff time period may be equal to the duration of the preset time period in step 203, so that the first network node broadcasts the second ID sending request after the another network node sends the packet. After the preset backoff time period, the another network node whose priority is higher at a previous moment has sent the packet. The another network node updates an ID number after sending the packet, and the first network node updates a packet ID number of the first network node after detecting, through listening, that the another network node sends the packet. When the first network node broadcasts the second ID sending request, the second ID number in the second ID sending request is the updated packet ID number. Therefore, it can be ensured that there are no packets whose packet ID numbers are the same in packets sent by all the network nodes in the first broadcast domain.

In step 209, when determining that the first packet is not a repeated packet, the second network node receives the first packet.

It should be noted that the MAC address of the destination end node is carried in the first packet sent by the first network node, and the second network node can determine, based on the first packet, whether the second network node is the destination end node. Because the MAC address of the destination end node carried in the first packet is the MAC address of the second network node, the second network node receives the first packet after determining that the second network node is the destination end node.

Optionally, when receiving the first packet forwarded by the fourth network node, the second network node may determine whether the first packet is a repeated packet. For a specific determining method, refer to the foregoing steps 2041 to 2044, and details are not described herein again in this embodiment of the present invention.

In actual application, there may be more than one relay node between the first network node and the second network node. When relay nodes other than the fourth network node exist between the first network node and the second network node, each of the other relay nodes repeatedly performs the foregoing steps 2041 to 2045. When no relay node exists between the first network node and the second network node, step 209 is directly performed after step 204 ends.

For example, in this embodiment of the present invention, the shared medium network includes three broadcast domains, and the packet sequence number change rule is a monotonically increasing rule. As shown in FIG. 2-7, the three broadcast domains are respectively a first broadcast domain A, a second broadcast domain B, and a third broadcast domain C. A cross-domain relay node of the first broadcast domain A and the second broadcast domain B is a first cross-domain relay node 01, and a cross-domain relay node of the second broadcast domain B and the third broadcast domain C is a second cross-domain relay node 02. It is assumed that a domain number of the first broadcast domain is 1, a packet sequence number of a first packet is 6, a first target packet sequence number that is in a buffer entry of the first cross-domain relay node 01 and that is corresponding to the domain number 1 is 4, and a second target packet sequence number that is in a buffer entry of the second cross-domain relay node 02 and that is corresponding to the domain number 1 is 4. When a first network node 03 in the first broadcast domain A sends the first packet to a second network node 04 in the third broadcast domain C, the first packet first arrives at the first cross-domain relay node 01. The first cross-domain relay node 01 can determine, based on a MAC address of a destination end node that is carried in the first packet, that the first cross-domain relay node 01 is not the destination end node. The first cross-domain relay node 01 obtains a packet ID number of the first packet, and compares the packet sequence number of the first packet with the first target packet sequence number. Because the packet sequence number change rule meets the monotonically increasing rule, the first cross-domain relay node 01 determines that the packet sequence number of the first packet is greater than the first target packet sequence number, and therefore can determine that the first packet is not a repeated packet. The first target packet sequence number is updated to the packet sequence number of the first packet, and an updated first target packet sequence number is 6. The first cross-domain relay node 01 forwards the first packet to the second cross-domain relay node 02. The second cross-domain relay node 02 can determine, based on the MAC address of the destination end node that is carried in the first packet, that the second cross-domain relay node 02 is not the destination end node. The second cross-domain relay node 02 obtains the packet ID number of the first packet, and compares the packet sequence number of the first packet with the second target packet sequence number. Because the packet sequence number change rule meets the monotonically increasing rule, the second cross-domain relay node 02 determines that the packet sequence number of the first packet is greater than the second target packet sequence number, and therefore can determine that the first packet is not a repeated packet. The second target packet sequence number is updated to the packet sequence number of the first packet, and an updated second target packet sequence number is 6. The second cross-domain relay node 02 forwards the first packet to the second network node 04. The second network node 04 can determine, based on the MAC address of the destination end node that is carried in the first packet, that the second network node 04 is the destination end node, and receive the first packet.

It should be noted that when forwarding the first packet to the second network node 04, the second cross-domain relay node 02 may also forward the first packet to the first cross-domain relay node 01. After receiving the first packet forwarded by the second cross-domain relay node 02, the first cross-domain relay node 01 obtains the packet ID number of the first packet, and compares the packet sequence number of the first packet with the updated first target packet sequence number. Because the packet sequence number change rule meets the monotonically increasing rule, and the packet sequence number of the first packet is 6 and is equal to the updated first target packet sequence number, the first cross-domain relay node 01 can determine that the first packet is a repeated packet, and discard the first packet.

In the same packet transmission scenario in the foregoing embodiment of the present invention, the first network node is a source end node, the second network node is a destination end node, and the fourth network node is a relay node. In actual application, in different packet transmission scenarios, a network node may function as a source end node, a relay node, and a destination end node. For example, in another packet transmission scenario in this embodiment of the present invention, the first network node may function as a relay node. As shown in FIG. 3, assuming that a first network node receives and forwards a packet sent by a third network node, the packet transmission method may include the following steps.

In step 301, the first network node receives a third packet sent by the third network node. A packet ID number of the third packet includes a third domain number and a third packet sequence number.

It should be noted that the third network node is any network node in the shared medium network other than the first network node.

In step 302, the first network node determines whether the third domain number is recorded in a buffer entry of the first network node; and when the third domain number is recorded in the buffer entry of the first network node, performs step 303; or when the first domain number is not recorded in the buffer entry of the fourth network node, performs step 306.

In step 303, the first network node obtains a target packet sequence number that is in the buffer entry and that is corresponding to the third domain number.

In step 304, the first network node determines whether the third packet sequence number meets a preset comparison condition; and when the third packet sequence number does not meet the preset comparison condition, performs step 305; or when the third packet sequence number meets the preset comparison condition, performs step 306.

It should be noted that for a detailed explanation of this step, refer to the foregoing step 2043, and details are not described herein again.

In step 305, the first network node determines that the third packet is a repeated packet, and discards the third packet.

In step 306, the first network node forwards the first packet, and updates the target packet sequence number in the buffer entry to the third packet sequence number.

Optionally, for a specific implementation process of step 301 to step 306, refer to the foregoing step 2041 to step 2045. In this packet transmission scenario, the first network node may perform a function of the fourth network node in the foregoing packet transmission scenario, and details are not described herein in this embodiment of the present invention.

It should be noted that in a packet transmission process, a newly powered-on network node may need to join a shared medium network, to send, forward, or receive a packet. It is assumed that the newly powered-on network node is a fifth network node, the fifth network node can join a first broadcast domain, and a master node in the first broadcast domain is a first master node. In this case, as shown in FIG. 4, a process in which the fifth network node joins the broadcast domain may include the following steps.

In step 401, the fifth network node sends a domain joining request message to the first master node.

Optionally, when the fifth network node can detect all network nodes in the first broadcast domain through listening, the fifth network node may request to join the first broadcast domain, to form a new one-hop broadcast domain. Optionally, if the fifth network node can form new one-hop broadcast domains with a plurality of broadcast domains, the fifth network node may send the domain joining request message to master nodes in the plurality of broadcast domains.

In step 402, the first master node sends a domain joining permission message to the fifth network node based on the domain joining request message. The domain joining permission message includes a packet ID used by a network node in the first broadcast domain at a current moment to identify a packet, and a life cycle of the packet ID.

It should be noted that the domain joining permission message sent to the fifth network node further includes current remaining duration of the life cycle of the packet ID, so that it can be ensured that the fifth network node can update a packet sequence number in synchronization with another network node in the shared medium network.

In step 403, the fifth network node updates a packet ID of the fifth network node and a life cycle of the packet ID based on the domain joining permission message.

Optionally, when receiving domain joining permission messages sent by master nodes in a plurality of broadcast domains, the fifth network node may use a first received domain joining permission message as a target domain joining permission message, and update the packet ID and the life cycle of the packet ID based on the target domain joining permission message.

In step 404, the fifth network node sends a domain joining confirmation message to the first master node.

In step 405, the first master node receives the domain joining confirmation message, and determines that the fifth network node joins the first broadcast domain.

It should be noted that when some network nodes cannot maintain an existing one-hop broadcast domain relationship, for example, when a network node is faulty or a network node finds, when listening to another network node in a current broadcast domain, that a signal detected through listening is relatively weak or even no signal can be detected through listening, the network node may automatically exit from the current broadcast domain, and join a new broadcast domain. For a joining process, refer to the foregoing steps 401 to 405.

In conclusion, according to the packet transmission method provided in this embodiment of the present invention, when the first network node in the first broadcast domain needs to send the first packet, the first network node first broadcasts the ID sending request. When receiving no ID sending request broadcast by the another network node, the first network node sends the first packet to the second network node, and packet IDs of all the network nodes in the first broadcast domain are updated. This ensures that only one network node in the first broadcast domain can send one packet in the preset time period, to avoid a phenomenon that determining cannot be performed because packet IDs carried in packets simultaneously sent by different network nodes in a same broadcast domain are the same. In addition, the shared medium network includes the at least two broadcast domains, and in one packet life cycle, all packet IDs of packets sent by network nodes in a same broadcast domain are different from each other. Therefore, compared with the prior art in which a relay node needs to establish one entry for each network node in the shared medium network, in this embodiment of the present invention, the relay node only needs to establish a maximum of an entry corresponding to each broadcast domain. This decreases memory that needs to be occupied by a buffer entry, reduces power consumption of the relay node, and improves reliability in determining a repeated packet.

All the foregoing optional technical solutions may be randomly combined to form optional embodiments of this application, and details are not described herein.

It should be noted that a sequence of the steps in the packet transmission method provided in this embodiment of the present invention may be appropriately adjusted, and a quantity of steps may also be increased or decreased based on a condition. For example, step 207 in which the first network node updates the ID number in synchronization with the another network node in the first broadcast domain may alternatively be performed after step 209 in which the second network node receives the first packet. Any modified method readily figured out by a person skilled in the art within the technical scope disclosed in this disclosure shall fall within the protection scope of this disclosure, and therefore details are not described herein.

FIG. 5-1 is a schematic structural diagram of a packet transmission apparatus 50 according to an embodiment of the present invention. As shown in FIG. 5-1, the packet transmission apparatus 50 is used for a first network node in a shared medium network. The shared medium network includes at least two broadcast domains, each of the at least two broadcast domains includes at least two network nodes, and packet identity ID numbers used by all network nodes in a first broadcast domain to identify packets are the same at a same moment and are different from a packet ID number used by a network node in another broadcast domain to identify a packet. The first broadcast domain is any broadcast domain in the shared medium network, and the first network node is any network node in the first broadcast domain. The packet transmission apparatus 50 may include a first broadcast module 501, a first sending module 502, and an update module 503.

The first broadcast module 501 is configured to broadcast a first ID sending request in the first broadcast domain, where the first ID sending request includes a first ID number, and the first ID number is a packet ID number used by each network node in the first broadcast domain at a current moment to identify a packet.

The first sending module 502 is configured to: when no ID sending request sent by another network node is received within a preset time period, send a first packet to a second network node, where the first packet includes the first ID number, and the another network node is a node in the first broadcast domain other than the first network node.

The update module 503 is configured to: after the first packet is sent to the second network node, update the ID number in synchronization with the another network node in the first broadcast domain, to obtain a second ID number, where the second ID number and the first ID number meet a preset change rule, and the change rule is a monotonically increasing rule or a monotonically decreasing rule.

Optionally, the first ID sending request is used to request to send specified information. As shown in FIG. 5-2, the packet transmission apparatus 50 may further include a comparison module 504, a second sending module 505, and a second broadcast module 506.

The comparison module 504 is configured to: when an ID sending request sent by the another network node is received within the preset time period, compare a sending priority of the first network node with a sending priority of the another network node.

The second sending module 505 is configured to: when the sending priority of the first network node is higher than the sending priority of the another network node, send the first packet to the second network node.

The second broadcast module 506 is configured to: when the sending priority of the first network node is lower than the sending priority of the another network node, broadcast a second ID sending request after a preset backoff time period, where the second ID sending request is used to request to send the specified information, the second ID sending request includes a second ID number, and the second ID number is an ID number synchronously updated by the first network node after the another network node sends a packet.

Optionally, the first broadcast module 501 is configured to repeatedly broadcast the first ID sending request in the first broadcast domain for k times, where k is a preset value, and is greater than or equal to 2.

Optionally, each ID sending request includes a quantity of request times. As shown in FIG. 5-3, the comparison module 504 may include a first comparison sub-module 5041, a first determining sub-module 5042, and a second determining sub-module 5043.

The first comparison sub-module 5041 is configured to compare a first quantity of request times with a second quantity of request times, where the first quantity of request times is a quantity of request times in an ID sending request broadcast by the another network node, and the second quantity of request times is a quantity of request times in an ID sending request broadcast by the first network node.

The first determining sub-module 5042 is configured to: when the first quantity of request times is greater than the second quantity of request times, determine that the sending priority of the first network node is lower than the sending priority of the another network node.

The second determining sub-module 5043 is configured to: when the first quantity of request times is less than the second quantity of request times, determine that the sending priority of the first network node is higher than the sending priority of the another network node.

Optionally, each ID sending request may further include a Media Access Control MAC address. As shown in FIG. 5-4, the comparison module 504 may further include a second comparison sub-module 5044, a third determining sub-module 5045, and a fourth determining sub-module 5046.

The second comparison sub-module 5044 is configured to: when the first quantity of request times is equal to the second quantity of request times, compare a value of a MAC address of the another network node with a value of a MAC address of the first network node.

The third determining sub-module 5045 is configured to: when the value of the MAC address of the another network node meets a preset comparison rule, determine that the sending priority of the first network node is lower than the sending priority of the another network node.

The fourth determining sub-module 5046 is configured to: when the value of the MAC address of the another network node does not meet a preset comparison rule, determine that the sending priority of the first network node is higher than the sending priority of the another network node.

The preset comparison rule includes: the value of the MAC address of the another network node is greater than the value of the MAC address of the first network node, or the value of the MAC address of the another network node is less than the value of the MAC address of the first network node.

Optionally, a packet ID number of each network node includes a variable packet sequence number and a domain number that is used to uniquely identify a broadcast domain in which the network node is located.

Optionally, the update module 503 is configured to change a packet sequence number in the first ID number to obtain the second ID number, so that a changed packet sequence number and the unchanged packet sequence number meet the change rule, where the second ID number includes a first domain number and the changed packet sequence number.

Optionally, each broadcast domain may include one master node, and the master node is configured to manage a network node in a broadcast domain in which the master node is located. As shown in FIG. 5-5, the packet transmission apparatus 50 may further include a first receiving module 507, a generation module 508, a timing module 509, and a reset module 510.

The first receiving module 507 is configured to receive an ID initialization instruction sent by a first master node, where the ID initialization instruction includes the first domain number and an initial sequence number, and the first master node is a master node in the first broadcast domain.

The generation module 508 is configured to: based on the ID initialization instruction, set a packet sequence number of the first network node to the initial sequence number, and generate an initial ID number, where the initial ID number includes the first domain number and the initial sequence number.

The timing module 509 is configured to start a countdown at a generation moment of the initial ID number.

The reset module 510 is configured to: when the countdown ends, reset the packet sequence number of the first network node to the initial sequence number.

Optionally, the initial sequence number may be 0, the change rule is the monotonically increasing rule, the changed packet sequence number is equal to the unchanged packet sequence number plus x, and x is greater than or equal to 1; or the initial sequence number may be M, the change rule is the monotonically decreasing rule, the changed packet sequence number is equal to the unchanged packet sequence number minus x, and x is greater than or equal to 1.

Optionally, when the change rule is the monotonically increasing rule, as shown in FIG. 5-6, the packet transmission apparatus 50 may include a second receiving module 511, a first obtaining module 512, a first judging module 513, a first discarding module 514, and a first forwarding module 515.

The second receiving module 511 is configured to receive a third packet sent by a third network node, where a packet ID number of the third packet includes a third domain number and a third packet sequence number.

The first obtaining module 512 is configured to: when the third domain number is recorded in a buffer entry of the first network node, obtain a target packet sequence number that is in the buffer entry and that is corresponding to the third domain number, where packet ID numbers of latest packets are recorded in the buffer entry, and the latest packets are latest packets, in packets received by the first network node from a plurality of broadcast domains, from all the broadcast domains.

The first judging module 513 is configured to determine whether the third packet sequence number is greater than the target packet sequence number.

The first discarding module 514 is configured to: when the third packet sequence number is not greater than the target packet sequence number, determine that the third packet is a repeated packet, and discard the third packet.

The first forwarding module 515 is configured to: when the packet sequence number of the third packet is greater than the target packet sequence number, forward the third packet, and update the target packet sequence number in the buffer entry to the third packet sequence number.

Optionally, when the change rule is the monotonically decreasing rule, as shown in FIG. 5-7, the packet transmission apparatus 50 may include: a third receiving module 516, a second obtaining module 517, a second judging module 518, a second discarding module 519, and a second forwarding module 520.

The third receiving module 516 is configured to receive a third packet sent by a third network node, where a packet ID number of the third packet includes a third domain number and a third packet sequence number.

The second obtaining module 517 is configured to: when the third domain number is recorded in a buffer entry of the first network node, obtain a target packet sequence number that is in the buffer entry and that is corresponding to the third domain number, where packet ID numbers of latest packets are recorded in the buffer entry, and the latest packets are latest packets, in packets received by the first network node from a plurality of broadcast domains, from all the broadcast domains.

The second judging module 518 is configured to determine whether the third packet sequence number is less than the target packet sequence number.

The second discarding module 519 is configured to: when the third packet sequence number is not less than the target packet sequence number, determine that the third packet is a repeated packet, and discard the third packet.

The second forwarding module 520 is configured to: when the packet sequence number of the third packet is less than the target packet sequence number, forward the third packet, and update the target packet sequence number in the buffer entry to the third packet sequence number.

Optionally, each broadcast domain may include one cross-domain relay node, and the cross-domain relay node is located in at least two broadcast domains. As shown in FIG. 5-8, the packet transmission apparatus 50 may further include a determining module 521.

The determining module 521 is configured to determine the master node and a cross-domain relay node in the first broadcast domain.

In conclusion, according to the packet transmission apparatus provided in this embodiment of the present invention, when the first network node in the first broadcast domain needs to send the first packet, the first network node first broadcasts the ID sending request by using the first broadcast module. When receiving no ID sending request broadcast by the another network node, the first network node sends the first packet to the second network node by using the first sending module, and packet IDs of all the network nodes in the first broadcast domain are updated by using the update module. This ensures that only one network node in the first broadcast domain can send one packet in the preset time period, to avoid a phenomenon that determining cannot be performed because packet IDs carried in packets simultaneously sent by different network nodes in a same broadcast domain are the same. In addition, the shared medium network includes the at least two broadcast domains, and in one packet life cycle, all packet IDs of packets sent by network nodes in a same broadcast domain are different from each other. Therefore, compared with the prior art in which a relay node needs to establish one entry for each network node in the shared medium network, in this embodiment of the present invention, the relay node only needs to establish a maximum of an entry corresponding to each broadcast domain. This decreases memory that needs to be occupied by a buffer entry, reduces power consumption of the relay node, and improves reliability in determining a repeated packet.

FIG. 6-1 is a schematic structural diagram of a network device in an embodiment shown in FIG. 1-2. As shown in FIG. 6-1, the network device 100 may be the foregoing source end node, relay node, or destination end node, and the network device 100 includes a processor 12 and a network interface 14.

The processor 12 includes one or more processing cores. The processor 12 executes various function applications and processes data by running a software program and a unit.

There may be a plurality of network interfaces 14, and the network interface 14 is configured to communicate with another storage device or network device.

Optionally, the network device 100 further includes components such as a memory 16 and a bus 18. Both the memory 16 and the network interface 14 are connected to the processor 12 by using the bus 18.

The memory 16 may be configured to store a software program and a unit. Specifically, the memory 16 may store an operating system 162 and an application program unit 164 required for at least one function. The operating system 162 may be an operating system such as a real-time operating system (Real Time eXecutive, RTX), LINUX, UNIX, WINDOWS, or OS X.

FIG. 6-2 is a schematic diagram of a first application program unit in an embodiment shown in FIG. 1-2. As shown in FIG. 6-2, when the network device 100 is a source end node, the application program unit 164 may be a first broadcast unit 164a, a first sending unit 164b, and an update unit 164c.

The first broadcast unit 164a has a function the same as or similar to that of the first broadcast module 501.

The first sending unit 164b has a function the same as or similar to that of the first sending module 502.

The update unit 164c has a function the same as or similar to that of the update module 503.

FIG. 6-3 is a schematic diagram of a second application program unit in an embodiment shown in FIG. 1-2. As shown in FIG. 6-3, when the network device 100 is a source end node, the application program unit 164 may alternatively be a first broadcast unit 164a, a first sending unit 164b, an update unit 164c, a comparison unit 164d, a second sending unit 164e, and a second broadcast unit 164f.

The first broadcast unit 164a has a function the same as or similar to that of the first broadcast module 501.

The first sending unit 164b has a function the same as or similar to that of the first sending module 502.

The update unit 164c has a function the same as or similar to that of the update module 503.

The comparison unit 164d has a function the same as or similar to that of the comparison module 504.

The second sending unit 164e has a function the same as or similar to that of the second sending module 505.

The second broadcast unit 164f has a function the same as or similar to that of the second broadcast module 506.

FIG. 6-4 is a schematic diagram of a third application program unit in an embodiment shown in FIG. 1-2. As shown in FIG. 6-4, when the network device 100 is a source end node, the application program unit 164 may alternatively be a first broadcast unit 164a, a first sending unit 164b, an update unit 164c, a first receiving unit 164g, a generation unit 164h, a timing unit 164i, and a reset unit 164j.

The first broadcast unit 164a has a function the same as or similar to that of the first broadcast module 501.

The first sending unit 164b has a function the same as or similar to that of the first sending module 502.

The update unit 164c has a function the same as or similar to that of the update module 503.

The first receiving unit 164g has a function the same as or similar to that of the first receiving module 507.

The generation unit 164h has a function the same as or similar to that of the generation module 508.

The timing unit 164i has a function the same as or similar to that of the timing module 509.

The reset unit 164j has a function the same as or similar to that of the reset module 510.

FIG. 6-5 is a schematic diagram of a fourth application program unit in an embodiment shown in FIG. 1-2. As shown in FIG. 6-5, when the network device 100 is a relay node, the application program unit 164 may alternatively be a second receiving unit 164k, a first obtaining unit 1641, a first judging unit 164m, a first discarding unit 164n, and a first forwarding unit 164o.

The second receiving unit 164k has a function the same as or similar to that of the second receiving module 511.

The first obtaining unit 1641 has a function the same as or similar to that of the first obtaining module 512.

The first judging unit 164m has a function the same as or similar to that of the first judging module 513.

The first discarding unit 164n has a function the same as or similar to that of the first discarding module 514.

The first forwarding unit 164o has a function the same as or similar to that of the first forwarding module 515.

FIG. 6-6 is a schematic diagram of a fifth application program unit in an embodiment shown in FIG. 1-2. As shown in FIG. 6-6, when the network device 100 is a relay node, the application program unit 164 may alternatively be a third receiving unit 164p, a second obtaining unit 164q, a second judging unit 164r, a second discarding unit 164s, and a second forwarding unit 164t.

The third receiving unit 164p has a function the same as or similar to that of the third receiving module 516.

The second obtaining unit 164q has a function the same as or similar to that of the second obtaining module 517.

The second judging unit 164r has a function the same as or similar to that of the second judging module 518.

The second discarding unit 164s has a function the same as or similar to that of the second discarding module 519.

The second forwarding unit 164t has a function the same as or similar to that of the second forwarding module 520.

It may be clearly understood by a person skilled in the art that for the purpose of convenient and brief description, for a detailed working process of the device and module described above, reference may be made to a corresponding process in the foregoing method embodiments, and details are not described herein again.

## Claims

1. A packet transmission method for a first network node in a shared medium network, the shared medium network comprises at least two broadcast domains, each of the at least two broadcast domains comprises at least two network nodes and packet identity, ID, numbers each including a variable packet sequence number m and a domain number n that uniquely identifies a broadcast domain in which the network node is located used by all network nodes in a first broadcast domain to identify packets, said packet ID numbers being the same at a same moment for all network nodes in the same broadcast domain and being different from packet ID numbers used by a network node in another broadcast domain to identify packets, the first broadcast domain is any broadcast domain in the shared medium network, the first network node is any network node in the first broadcast domain, and the method comprises:
broadcasting (202) a first ID sending request in the first broadcast domain, wherein the first ID sending request is used to request to send specified information and comprises a first ID number, and the first ID number is a packet ID number used by each network node in the first broadcast domain at a current moment to identify a packet;
when receiving, within a preset time period, no ID sending request sent by another network node (203), sending (204) a first packet to a second network node, wherein the first packet comprises the first ID number, and the another network node is a node in the first broadcast domain other than the first network node; and
after sending the first packet to the second network node, updating (207) the ID number in synchronization with the another network node in the first broadcast domain, to obtain a second ID number, wherein the second ID number and the first ID number meet a preset change rule, and the change rule is a monotonically increasing rule or a monotonically decreasing rule, wherein the first broadcast domain is a one-hop broadcast domain and the another network node in the first broadcast domain detects the packet ID number of the first network node through listening;
and the method further comprises:
when receiving (203), within the preset time period, an ID sending request sent by the another network node, comparing (205) a sending priority of the first network node with a sending priority of the another network node; and
when the sending priority of the first network node is higher than the sending priority of the another network node (208), sending (206) the first packet to the second network node; or when the sending priority of the first network node is lower than the sending priority of the another network node, broadcasting a second ID sending request after a preset backoff time period, wherein the second ID sending request is used to request to send the specified information, the second ID sending request comprises a second ID number, and the second ID number is an ID number synchronously updated by the first network node after the another network node sends a packet.

2. The method according to claim 1, wherein
the broadcasting a first ID sending request in the first broadcast domain comprises:
repeatedly broadcasting the first ID sending request in the first broadcast domain for k times, wherein k is a preset value, and is greater than or equal to 2.

3. The method according to claim 1 or 2, wherein each ID sending request comprises a quantity of request times, and the comparing a sending priority of the first network node with a sending priority of the another network node comprises:
comparing a first quantity of request times with a second quantity of request times, wherein the first quantity of request times is a quantity of request times in an ID sending request broadcast by the another network node, and the second quantity of request times is a quantity of request times in an ID sending request broadcast by the first network node; and
when the first quantity of request times is greater than the second quantity of request times, determining that the sending priority of the first network node is lower than the sending priority of the another network node; or
when the first quantity of request times is less than the second quantity of request times, determining that the sending priority of the first network node is higher than the sending priority of the another network node.

4. The method according to claim 3, wherein each ID sending request further comprises a Media Access Control MAC address, and the comparing a sending priority of the first network node with a sending priority of the another network node further comprises:
when the first quantity of request times is equal to the second quantity of request times, comparing a value of a MAC address of the another network node with a value of a MAC address of the first network node; and
when the value of the MAC address of the another network node meets a preset comparison rule, determining that the sending priority of the first network node is lower than the sending priority of the another network node; or
when the value of the MAC address of the another network node does not meet the preset comparison rule, determining that the sending priority of the first network node is higher than the sending priority of the another network node, wherein
the preset comparison rule comprises: the value of the MAC address of the another network node is greater than the value of the MAC address of the first network node, or the value of the MAC address of the another network node is less than the value of the MAC address of the first network node.

5. The method according to claim 1, wherein the method further comprises:
a packet ID number of each network node comprises a variable packet sequence number and a domain number that is used to uniquely identify a broadcast domain in which the network node is located; and
the updating the ID number in synchronization with the another network node in the first broadcast domain, to obtain a second ID number comprises:
changing a packet sequence number in the first ID number to obtain the second ID number, so that a changed packet sequence number and the unchanged packet sequence number meet the change rule, wherein the second ID number comprises a first domain number and the changed packet sequence number.

6. The method according to claim 5, wherein each broadcast domain comprises one master node, and the master node is configured to manage a network node in a broadcast domain in which the master node is located; and
before broadcasting an ID sending request in the first broadcast domain, the method further comprises:
receiving an ID initialization instruction sent by a first master node, wherein the ID initialization instruction comprises the first domain number and an initial sequence number, and the first master node is a master node in the first broadcast domain;
based on the ID initialization instruction, setting a packet sequence number of the first network node to the initial sequence number, and generating an initial ID number, wherein the initial ID number comprises the first domain number and the initial sequence number;
starting a countdown at a generation moment of the initial ID number; and
when the countdown ends, resetting the packet sequence number of the first network node to the initial sequence number.

7. The method according to claim 6, wherein the initial sequence number is 0, the change rule is the monotonically increasing rule, the changed packet sequence number is equal to the unchanged packet sequence number plus x, and x is greater than or equal to 1; or
the initial sequence number is M, the change rule is the monotonically decreasing rule, the changed packet sequence number is equal to the unchanged packet sequence number minus x, and x is greater than or equal to 1.

8. A packet transmission apparatus (50) for a first network node in a shared medium network, wherein the shared medium network comprises at least two broadcast domains, each of the at least two broadcast domains comprises at least two network nodes and packed identity, ID, numbers each including a variable packet sequence number m and a domain number n that uniquely identifies a broadcast domain in which the network node is located numbers used by all network nodes in a first broadcast domain to identify packets, said packet ID numbers being the same at a same moment for all the network nodes in the same broadcast domain and being different from packet ID numbers used by a network node in another broadcast domain to identify packets, the first broadcast domain is any broadcast domain in the shared medium network, the first network node is any network node in the first broadcast domain, and the apparatus comprises:
a first broadcast module (501), configured to broadcast a first ID sending request in the first broadcast domain, wherein the first ID sending request is used to request to send specified information and comprises a first ID number, and the first ID number is a packet ID number used by each network node in the first broadcast domain at a current moment to identify a packet;
a first sending module (502), configured to: when no ID sending request sent by another network node is received within a preset time period, send a first packet to a second network node, wherein the first packet comprises the first ID number, and the another network node is a node in the first broadcast domain other than the first network node; and
an update module (503), configured to: after the first packet is sent to the second network node, update the ID number in synchronization with the another network node in the first broadcast domain, to obtain a second ID number, wherein the second ID number and the first ID number meet a preset change rule, and the change rule is a monotonically increasing rule or a monotonically decreasing rule, wherein the first broadcast domain is a one-hop broadcast domain and the another network node in the first broadcast domain detects the packet ID number of the first network node through listening.
wherein the apparatus further comprises:
a comparison module (504), configured to: when an ID sending request sent by the another network node is received within the preset time period, compare a sending priority of the first network node with a sending priority of the another network node;
a second sending module (505), configured to: when the sending priority of the first network node is higher than the sending priority of the another network node, send the first packet to the second network node; and
a second broadcast module (506), configured to: when the sending priority of the first network node is lower than the sending priority of the another network node, broadcast a second ID sending request after a preset backoff time period, wherein the second ID sending request is used to request to send the specified information, the second ID sending request comprises a second ID number, and the second ID number is an ID number synchronously updated by the first network node after the another network node sends a packet.

9. The apparatus according to claim 8, wherein
the first broadcast module is configured to:
repeatedly broadcast the first ID sending request in the first broadcast domain for k times, wherein k is a preset value, and is greater than or equal to 2.

10. The apparatus according to claim 8 or 9, wherein each ID sending request comprises a quantity of request times, and the comparison module comprises:
a first comparison sub-module (5041), configured to compare a first quantity of request times with a second quantity of request times, wherein the first quantity of request times is a quantity of request times in an ID sending request broadcast by the another network node, and the second quantity of request times is a quantity of request times in an ID sending request broadcast by the first network node;
a first determining sub-module (5042), configured to: when the first quantity of request times is greater than the second quantity of request times, determine that the sending priority of the first network node is lower than the sending priority of the another network node; and
a second determining sub-module (5043), configured to: when the first quantity of request times is less than the second quantity of request times, determine that the sending priority of the first network node is higher than the sending priority of the another network node.

11. The apparatus according to claim 10, wherein each ID sending request further comprises a Media Access Control MAC address, and the comparison module further comprises:
a second comparison sub-module, configured to: when the first quantity of request times is equal to the second quantity of request times, compare a value of a MAC address of the another network node with a value of a MAC address of the first network node;
a third determining sub-module, configured to: when the value of the MAC address of the another network node meets a preset comparison rule, determine that the sending priority of the first network node is lower than the sending priority of the another network node; and
a fourth determining sub-module (5046), configured to: when the value of the MAC address of the another network node does not meet the preset comparison rule, determine that the sending priority of the first network node is higher than the sending priority of the another network node, wherein
the preset comparison rule comprises: the value of the MAC address of the another network node is greater than the value of the MAC address of the first network node, or the value of the MAC address of the another network node is less than the value of the MAC address of the first network node.

12. The apparatus according to claim 8, wherein
a packet ID number of each network node comprises a variable packet sequence number and a domain number that is used to uniquely identify a broadcast domain in which the network node is located; and
the update module is configured to:
change a packet sequence number in the first ID number to obtain the second ID number, so that a changed packet sequence number and the unchanged packet sequence number meet the change rule, wherein the second ID number comprises a first domain number and the changed packet sequence number.

13. The apparatus according to claim 12, wherein each broadcast domain comprises one master node, and the master node is configured to manage a network node in a broadcast domain in which the master node is located; and
the apparatus further comprises:
a first receiving module, configured to receive an ID initialization instruction sent by a first master node, wherein the ID initialization instruction comprises the first domain number and an initial sequence number, and the first master node is a master node in the first broadcast domain;
a generation module, configured to: based on the ID initialization instruction, set a packet sequence number of the first network node to the initial sequence number, and generate an initial ID number, wherein the initial ID number comprises the first domain number and the initial sequence number;
a timing module, configured to start a countdown at a generation moment of the initial ID number; and
a reset module, configured to: when the countdown ends, reset the packet sequence number of the first network node to the initial sequence number.

## Patentansprüche

1. Paketübertragungsverfahren für einen ersten Netzwerkknoten in einem Netzwerk mit gemeinsam genutztem Medium, wobei das Netzwerk mit gemeinsam genutztem Medium mindestens zwei Rundsende-Domänen umfasst, wobei jede der mindestens zwei Rundsende-Domänen mindestens zwei Netzwerkknoten und Paketidentitäts-, ID-Nummern umfasst, die jeweils eine variable Paketsequenznummer m und eine Domänennummer n enthalten, die eine Rundsende-Domäne, in der sich der Netzwerkknoten befindet, eindeutig identifiziert, die von allen Netzwerkknoten in einer ersten Rundsende-Domäne verwendet wird, um Pakete zu identifizieren, wobei die Paket-ID-Nummern für alle Netzwerkknoten in der gleichen Rundsende-Domäne zu einem gleichen Zeitpunkt gleich sind und sich von Paket-ID-Nummern unterscheiden, die von einem Netzwerkknoten in einer anderen Rundsende-Domäne verwendet werden, um Pakete zu identifizieren, wobei die erste Rundsende-Domäne eine beliebige Rundsende-Domäne in dem Netzwerk mit gemeinsam genutztem Medium ist, wobei der erste Netzwerkknoten ein beliebiger Netzwerkknoten in der ersten Rundsende-Domäne ist, und wobei das Verfahren Folgendes umfasst:
Rundsenden (202) einer ersten ID-Sendeanforderung in der ersten Rundsende-Domäne, wobei die erste ID-Sendeanforderung verwendet wird, um das Senden spezifizierter Informationen anzufordern, und eine erste ID-Nummer umfasst, und wobei die erste ID-Nummer eine Paket-ID-Nummer ist, die von jedem Netzwerkknoten in der ersten Rundsende-Domäne zu einem aktuellen Zeitpunkt verwendet wird, um ein Paket zu identifizieren;
wenn innerhalb einer voreingestellten Zeitspanne keine von einem anderen Netzwerkknoten (203) gesendete ID-Sendeanforderung empfangen wird, Senden (204) eines ersten Pakets an einen zweiten Netzwerkknoten, wobei das erste Paket die erste ID-Nummer umfasst und der andere Netzwerkknoten ein anderer Knoten in der ersten Rundsende-Domäne als der erste Netzwerkknoten ist; und
nach dem Senden des ersten Pakets an den zweiten Netzwerkknoten, Aktualisieren (207) der ID-Nummer synchron mit dem anderen Netzwerkknoten in der ersten Rundsende-Domäne, um eine zweite ID-Nummer zu erhalten, wobei die zweite ID-Nummer und die erste ID-Nummer eine voreingestellte Änderungsregel erfüllen und wobei die Änderungsregel eine monoton steigende Regel oder eine monoton fallende Regel ist, wobei die erste Rundsende-Domäne eine One-Hop-Rundsende-Domäne ist und der andere Netzwerkknoten in der ersten Rundsende-Domäne die Paket-ID-Nummer des ersten Netzwerkknotens durch Abhören erkennt;
das Verfahren ferner Folgendes umfassend:
beim Empfangen (203), innerhalb der voreingestellten Zeitspanne, einer ID Sendeanforderung, die von einem anderen Netzwerkknoten gesendet wurde, Vergleichen (205) einer Sendepriorität des ersten Netzwerkknotens mit einer Sendepriorität des anderen Netzwerkknotens; und
wenn die Sendepriorität des ersten Netzwerkknotens höher ist als die Sendepriorität des anderen Netzwerkknotens (208), Senden (206) des ersten Pakets an den zweiten Netzwerkknoten; oder
wenn die Sendepriorität des ersten Netzwerkknotens niedriger ist als die Sendepriorität des anderen Netzwerkknotens, Rundsenden einer zweiten ID-Sendeanforderung nach einer voreingestellten Backoff-Zeitspanne, wobei die zweite I D-Sendeanforderung verwendet wird, um das Senden der spezifizierten Informationen anzufordern, wobei die zweite ID-Sendeanforderung eine zweite ID-Nummer umfasst und die zweite ID-Nummer eine ID-Nummer ist, die durch den ersten Netzwerkknoten synchron aktualisiert wird, nachdem der andere Netzwerkknoten ein Paket gesendet hat.

2. Verfahren nach Anspruch 1, wobei das Senden einer ersten ID-Sendeanforderung in der ersten Rundsende-Domäne Folgendes umfasst:
k-mal wiederholtes Rundsenden der ersten ID-Sendeanforderung in der ersten Rundsende-Domäne, wobei k ein voreingestellter Wert ist und größer oder gleich 2 ist.

3. Verfahren nach Anspruch 1 oder 2, wobei jede ID-Sendeanforderung eine Anzahl von Anforderungszeiten umfasst, und wobei der Vergleich einer Sendepriorität des ersten Netzwerkknotens mit einer Sendepriorität des anderen Netzwerkknotens Folgendes umfasst:
Vergleichen einer ersten Menge von Anforderungszeiten mit einer zweiten Menge von Anforderungszeiten, wobei die erste Menge von Anforderungszeiten eine Menge von Anforderungszeiten in einer ID-Sendeanforderung ist, die von dem anderen Netzwerkknoten gesendet wird, und wobei die zweite Menge von Anforderungszeiten eine Menge von Anforderungszeiten in einer ID-Sendeanforderung ist, die von dem ersten Netzwerkknoten gesendet wird; und
wenn die erste Anzahl von Anforderungszeiten größer ist als die zweite Anzahl von Anforderungszeiten, Bestimmen, dass die Sendepriorität des ersten Netzwerkknotens niedriger ist als die Sendepriorität des anderen Netzwerkknotens; oder
wenn die erste Anzahl der Anforderungszeiten geringer ist als die zweite Anzahl der Anforderungszeiten, Bestimmen, dass die Sendepriorität des ersten Netzwerkknotens höher ist als die Sendepriorität des anderen Netzwerkknotens.

4. Verfahren nach Anspruch 3, wobei jede ID-Sendeanforderung ferner eine Media Access Control-, MAC,-Adresse umfasst, und wobei das Vergleichen einer Sendepriorität des ersten Netzwerkknotens mit einer Sendepriorität des anderen Netzwerkknotens ferner Folgendes umfasst:
wenn die erste Anzahl von Anforderungszeiten gleich der zweiten Anzahl von Anforderungszeiten ist, Vergleichen eines Wertes einer MAC-Adresse des anderen Netzwerkknotens mit einem Wert einer MAC-Adresse des ersten Netzwerkknotens; und
wenn der Wert der MAC-Adresse des anderen Netzwerkknotens eine voreingestellte Vergleichsregel erfüllt, Bestimmen, dass die Sendepriorität des ersten Netzwerkknotens niedriger ist als die Sendepriorität des anderen Netzwerkknotens; oder
wenn der Wert der MAC-Adresse des anderen Netzwerkknotens die voreingestellte Vergleichsregel nicht erfüllt, Bestimmen, dass die Sendepriorität des ersten Netzwerkknotens höher ist als die Sendepriorität des anderen Netzwerkknotens, wobei die voreingestellte Vergleichsregel beinhaltet, dass:
der Wert der MAC-Adresse des anderen Netzwerkknotens größer als der Wert der MAC-Adresse des ersten Netzwerkknotens oder der Wert der MAC-Adresse des anderen Netzwerkknotens kleiner als der Wert der MAC-Adresse des ersten Netzwerkknotens ist.

5. Verfahren nach Anspruch 1, das Verfahren ferner Folgendes umfassend:
eine Paket-ID-Nummer jedes Netzwerkknotens umfasst eine variable Paketsequenznummer und eine Domänennummer, die zur eindeutigen Identifizierung einer Rundsende-Domäne verwendet wird, in der sich der Netzwerkknoten befindet; und
wobei das Aktualisieren der ID-Nummer in Synchronisation mit dem anderen Netzwerkknoten in der ersten Rundsende-Domäne, um eine zweite ID-Nummer zu erhalten, Folgendes umfasst:
Ändern einer Paketsequenznummer in der ersten ID-Nummer, um die zweite ID-Nummer zu erhalten, sodass eine geänderte Paketsequenznummer und die unveränderte Paketsequenznummer die Änderungsregel erfüllen, wobei die zweite ID-Nummer eine erste Domänennummer und die geänderte Paketsequenznummer umfasst.

6. Verfahren nach Anspruch 5, wobei jede Rundsende-Domäne einen Master-Knoten umfasst und wobei der Master-Knoten so konfiguriert ist, dass er einen Netzwerkknoten in einer Rundsende-Domäne verwaltet, in der sich der Master-Knoten befindet; und
wobei vor dem Rundsenden einer ID-Sendeanforderung in der ersten Rundsende-Domäne das Verfahren ferner Folgendes umfasst:
Empfangen einer ID-Initialisierungsanweisung, die von einem ersten Master-Knoten gesendet wird, wobei die ID-Initialisierungsanweisung die erste Domänennummer und eine anfängliche Sequenznummer umfasst, und wobei der erste Master-Knoten ein Master-Knoten in der ersten Rundsende-Domäne ist;
basierend auf dem ID-Initialisierungsbefehl, Einstellen einer Paketsequenznummer des ersten Netzwerkknotens auf die anfängliche Sequenznummer und Erzeugen einer anfänglichen ID-Nummer, wobei die anfängliche ID-Nummer die erste Domänennummer und die anfängliche Sequenznummer umfasst;
Starten eines Countdowns zu einem Generierungszeitpunkt der anfänglichen ID-Nummer; und
wenn der Countdown endet, Zurücksetzen der Paketsequenznummer des ersten Netzwerkknotens auf die anfängliche Sequenznummer.

7. Verfahren nach Anspruch 6, wobei die anfängliche Sequenznummer 0 ist, die Änderungsregel die monoton steigende Regel, die geänderte Paketsequenznummer gleich der unveränderten Paketsequenznummer plus x und x größer oder gleich 1 ist; oder
wobei die anfängliche Sequenznummer M ist, die Änderungsregel die monoton fallende Regel, die geänderte Paketsequenznummer gleich der unveränderten Paketsequenznummer minus x und x größer oder gleich 1 ist.

8. Paketübertragungseinrichtung (50) für einen ersten Netzwerkknoten in einem Netzwerk mit gemeinsam genutztem Medium, wobei das Netzwerk mit gemeinsam genutztem Medium mindestens zwei Rundsende-Domänen umfasst, wobei jede der mindestens zwei Rundsende-Domänen mindestens zwei Netzwerkknoten und Paketidentitäts-, ID-Nummern umfasst, die jeweils eine variable Paketsequenznummer m und eine Domänennummer n enthalten, die eine Rundsende-Domäne, in der sich der Netzwerkknoten befindet, eindeutig identifiziert, Nummern, die von allen Netzwerkknoten in einer ersten Rundsende-Domäne verwendet werden, um Pakete zu identifizieren, wobei die Paket-ID-Nummern für alle Netzwerkknoten in derselben Rundsende-Domäne zu einem gleichen Zeitpunkt gleich sind und sich von Paket-I D-Nummern unterscheiden, die von einem Netzwerkknoten in einer anderen Rundsende-Domäne verwendet werden, um Pakete zu identifizieren, wobei die erste Rundsende-Domäne eine beliebige Rundsende-Domäne in dem Netzwerk mit gemeinsam genutztem Medium, der erste Netzwerkknoten ein beliebiger Netzwerkknoten in der ersten Rundsende-Domäne ist, und wobei die Einrichtung Folgendes umfasst:
ein erstes Rundsendemodul (501), das dafür konfiguriert ist, eine erste ID-Sendeanforderung in der ersten Rundsende-Domäne rundzusendem, wobei die erste ID-Sendeanforderung verwendet wird, um das Senden spezifizierter Informationen anzufordern, und eine erste ID-Nummer umfasst, und wobei die erste ID-Nummer eine Paket-ID-Nummer ist, die von jedem Netzwerkknoten in der ersten Rundsende-Domäne zu einem aktuellen Zeitpunkt verwendet wird, um ein Paket zu identifizieren;
ein erstes Sendemodul (502), das für Folgendes konfiguriert ist:
wenn innerhalb einer voreingestellten Zeitspanne keine von einem anderen Netzwerkknoten gesendete ID-Sendeanforderung empfangen wird, Senden eines ersten Pakets an einen zweiten Netzwerkknoten, wobei das erste Paket die erste ID-Nummer umfasst und der andere Netzwerkknoten ein anderer Knoten in der ersten Rundsende-Domäne als der erste Netzwerkknoten ist; und ein Aktualisierungsmodul (503), das für Folgendes konfiguriert ist:
nachdem das erste Paket an den zweiten Netzwerkknoten gesendet worden ist, Aktualisieren der ID-Nummer synchron mit dem anderen Netzwerkknoten in der ersten Rundsende-Domäne, um eine zweite ID-Nummer zu erhalten, wobei die zweite ID-Nummer und die erste ID-Nummer eine voreingestellte Änderungsregel erfüllen und wobei die Änderungsregel eine monoton steigende Regel oder eine monoton fallende Regel ist, wobei die erste Rundsende-Domäne eine One-Hop-Rundsende-Domäne ist und der andere Netzwerkknoten in der ersten Rundsende-Domäne die Paket-ID-Nummer des ersten Netzwerkknotens durch Abhören erkennt.
die Einrichtung ferner Folgendes umfassend:
ein Vergleichsmodul (504), das für Folgendes konfiguriert ist:
wenn innerhalb einer voreingestellten Zeitspanne eine von einem anderen Netzwerkknoten gesendete ID-Sendeanforderung empfangen wird, Vergleichen einer Sendepriorität des ersten Netzwerkknotens mit einer Sendepriorität des anderen Netzwerkknotens;
ein Sendemodul (505), das für Folgendes konfiguriert ist:
wenn die Sendepriorität des ersten Netzwerkknotens höher ist als die Sendepriorität des anderen Netzwerkknotens, Senden des ersten Pakets an den zweiten Netzwerkknoten; und
ein zweites Rundsendemodul (506), das für Folgendes konfiguriert ist:
wenn die Sendepriorität des ersten Netzwerkknotens niedriger ist als die Sendepriorität des anderen Netzwerkknotens, Rundsenden einer zweiten ID-Sendeanforderung nach einer voreingestellten Backoff-Zeitspanne, wobei die zweite ID-Sendeanforderung verwendet wird, um das Senden der spezifizierten Informationen anzufordern, wobei die zweite ID-Sendeanforderung eine zweite ID-Nummer umfasst und die zweite ID-Nummer eine ID-Nummer ist, die durch den ersten Netzwerkknoten synchron aktualisiert wird, nachdem der andere Netzwerkknoten ein Paket gesendet hat.

9. Einrichtung nach Anspruch 8, wobei das erste Rundsendemodul für Folgendes konfiguriert ist:
k-mal wiederholtes Rundsenden der ersten ID-Sendeanforderung in der ersten Rundsende-Domäne, wobei k ein voreingestellter Wert ist und größer oder gleich 2 ist.

10. Einrichtung nach Anspruch 8 oder 9, wobei jede ID-Sendeanforderung eine Anzahl von Anforderungszeiten umfasst und wobei das Vergleichsmodul Folgendes umfasst:
ein erstes Vergleichs-Submodul (5041), das für Folgendes konfiguriert ist:
Vergleichen einer ersten Menge von Anforderungszeiten mit einer zweiten Menge von Anforderungszeiten, wobei die erste Menge von Anforderungszeiten eine Menge von Anforderungszeiten in einer ID-Sendeanforderung ist, die von dem anderen Netzwerkknoten gesendet wird, und wobei die zweite Menge von Anforderungszeiten eine Menge von Anforderungszeiten in einer ID-Sendeanforderung ist, die von dem ersten Netzwerkknoten gesendet wird;
ein erstes Bestimmungs-Submodul (5042), das für Folgendes konfiguriert ist:
wenn die erste Anzahl von Anforderungszeiten größer ist als die zweite Anzahl von Anforderungszeiten, Bestimmen, dass die Sendepriorität des ersten Netzwerkknotens niedriger ist als die Sendepriorität des anderen Netzwerkknotens; und
ein zweites Bestimmungs-Submodul (5043), das für Folgendes konfiguriert ist:
wenn die erste Anzahl der Anforderungszeiten geringer ist als die zweite Anzahl der Anforderungszeiten, Bestimmen, dass die Sendepriorität des ersten Netzwerkknotens höher ist als die Sendepriorität des anderen Netzwerkknotens.

11. Einrichtung nach Anspruch 10, wobei jede ID-Sendeanforderung ferner eine Media Access Control-, MAC-Adresse umfasst und wobei das Vergleichsmodul ferner Folgendes umfasst:
ein zweites Vergleichs-Submodul, das für Folgendes konfiguriert ist:
wenn die erste Anzahl von Anforderungszeiten gleich der zweiten Anzahl von Anforderungszeiten ist, Vergleichen eines Wertes einer MAC-Adresse des anderen Netzwerkknotens mit einem Wert einer MAC-Adresse des ersten Netzwerkknotens;
ein drittes Bestimmungs-Submodul, das für Folgendes konfiguriert ist:
wenn der Wert der MAC-Adresse des anderen Netzwerkknotens eine voreingestellte Vergleichsregel erfüllt, Bestimmen, dass die Sendepriorität des ersten Netzwerkknotens niedriger ist als die Sendepriorität des anderen Netzwerkknotens; und
ein viertes Bestimmungs-Submodul (5046), das für Folgendes konfiguriert ist:
wenn der Wert der MAC-Adresse des anderen Netzwerkknotens die voreingestellte Vergleichsregel nicht erfüllt, Bestimmen, dass die Sendepriorität des ersten Netzwerkknotens höher ist als die Sendepriorität des anderen Netzwerkknotens, wobei die voreingestellte Vergleichsregel beinhaltet, dass:
der Wert der MAC-Adresse des anderen Netzwerkknotens größer als der Wert der MAC-Adresse des ersten Netzwerkknotens oder der Wert der MAC-Adresse des anderen Netzwerkknotens kleiner als der Wert der MAC-Adresse des ersten Netzwerkknotens ist.

12. Einrichtung nach Anspruch 8, wobei eine Paket-ID-Nummer jedes Netzwerkknotens eine variable Paketsequenznummer und eine Domänennummer umfasst, die zur eindeutigen Identifizierung einer Rundsende-Domäne verwendet wird, in der sich der Netzwerkknoten befindet; und
wobei das Aktualisierungsmodul für Folgendes konfiguriert ist:
Ändern einer Paketsequenznummer in der ersten ID-Nummer, um die zweite ID-Nummer zu erhalten, sodass eine geänderte Paketsequenznummer und die unveränderte Paketsequenznummer die Änderungsregel erfüllen, wobei die zweite ID-Nummer eine erste Domänennummer und die geänderte Paketsequenznummer umfasst.

13. Einrichtung nach Anspruch 12, wobei jede Rundsende-Domäne einen Master-Knoten umfasst und wobei der Master-Knoten dafür konfiguriert ist, einen Netzwerkknoten in einer Rundsende-Domäne zu verwalten, in der sich der Master-Knoten befindet; und
die Einrichtung ferner Folgendes umfassend:
ein erstes Empfangsmodul, das dafür konfiguriert ist, einen ID-Initialisierungsbefehl zu empfangen, der von einem ersten Master-Knoten gesendet wird, wobei der ID-Initialisierungsbefehl die erste Domänennummer und eine anfängliche Sequenznummer umfasst, und wobei der erste Master-Knoten ein Master-Knoten in der ersten Rundsende-Domäne ist;
ein Generierungsmodul, das für Folgendes konfiguriert ist:
basierend auf dem ID-Initialisierungsbefehl, Einstellen einer Paketsequenznummer des ersten Netzwerkknotens auf die anfängliche Sequenznummer und Erzeugen einer anfänglichen ID-Nummer, wobei die anfängliche ID-Nummer die erste Domänennummer und die anfängliche Sequenznummer umfasst;
ein Zeitsteuerungsmodul, das dafür konfiguriert ist, einen Countdown zu einem Generierungszeitpunkt der anfänglichen ID-Nummer zu starten; und
ein Reset-Modul, das für Folgendes konfiguriert ist:
wenn der Countdown endet, Zurücksetzen der Paketsequenznummer des ersten Netzwerkknotens auf die anfängliche Sequenznummer.

## Revendications

1. Procédé de transmission de paquets pour un premier nœud de réseau dans un réseau de support partagé, le réseau de support partagé comprend au moins deux domaines de diffusion, chacun des au moins deux domaines de diffusion comprend au moins deux nœuds de réseau et des numéros d'identification, ID, de paquet comprenant chacun un nombre m de séquences de paquet variable et un nombre n de domaines qui identifie de manière unique un domaine de diffusion dans lequel se trouve le nœud de réseau utilisé par tous les nœuds de réseau dans un premier domaine de diffusion pour identifier les paquets, lesdits numéros d'ID de paquet étant les mêmes au même moment pour tous les nœuds de réseau dans le même domaine de diffusion et étant différents des numéros d'ID de paquet utilisés par un nœud de réseau dans un autre domaine de diffusion pour identifier les paquets, le premier domaine de diffusion est un domaine de diffusion quelconque dans le réseau de support partagé, le premier nœud de réseau est un nœud de réseau quelconque dans le premier domaine de diffusion, et le procédé comprend :
la diffusion (202) d'une première demande d'envoi d'ID dans le premier domaine de diffusion, dans lequel la première demande d'envoi d'ID est utilisée pour demander d'envoyer des informations spécifiées et comprend un premier numéro d'ID, et le premier numéro d'ID est un numéro d'ID de paquet utilisé par chaque nœud de réseau dans le premier domaine de diffusion à un instant actuel pour identifier un paquet ;
lors de la réception, dans un délai prédéfini, d'aucune demande d'envoi d'ID envoyée par un autre nœud de réseau (203), l'envoi (204) d'un premier paquet à un deuxième nœud de réseau, dans lequel le premier paquet comprend le premier numéro d'ID, et l'autre nœud de réseau est un nœud dans le premier domaine de diffusion autre que le premier nœud de réseau ; et
après l'envoi du premier paquet au deuxième nœud de réseau, la mise à jour (207) du numéro d'ID en synchronisation avec l'autre nœud de réseau dans le premier domaine de diffusion, pour obtenir un deuxième numéro d'ID, dans lequel le deuxième numéro d'ID et le premier numéro d'ID répondent à une règle de changement prédéfinie, et la règle de changement est une règle à augmentation monotone ou une règle à diminution monotone, dans lequel le premier domaine de diffusion est un domaine de diffusion à un saut et l'autre nœud de réseau dans le premier domaine de diffusion détecte le numéro d'ID de paquet du premier réseau nœud par l'écoute ;
et le procédé comprend en outre :
lors de la réception (203), dans un délai prédéfini, d'une demande d'envoi d'ID envoyée par l'autre nœud de réseau, comparant (205) une priorité d'envoi du premier nœud de réseau avec une priorité d'envoi de l'autre nœud de réseau ; et
lorsque la priorité d'envoi du premier nœud de réseau est supérieure à la priorité d'envoi de l'autre nœud de réseau (208), l'envoi (206) du premier paquet au deuxième nœud de réseau ; ou lorsque la priorité d'envoi du premier nœud de réseau est inférieure à la priorité d'envoi de l'autre nœud de réseau, la diffusion d'une deuxième demande d'envoi d'ID après une période de temporisation prédéfinie, dans lequel la deuxième demande d'envoi d'ID est utilisée pour demander d'envoyer les informations spécifiées, la deuxième demande d'envoi d'ID comprend un deuxième numéro d'ID, et le deuxième numéro d'ID est un numéro d'ID mis à jour de manière synchrone par le premier nœud de réseau après que l'autre nœud de réseau a envoyé un paquet.

2. Procédé selon la revendication 1, dans lequel
la diffusion d'une première demande d'envoi d'ID dans le premier domaine de diffusion comprend :
la diffusion de manière répétée de la première demande d'envoi d'ID dans le premier domaine de diffusion pendant k fois, dans lequel k est une valeur prédéfinie, et est supérieur ou égal à 2.

3. Procédé selon la revendication 1 ou la revendication 2, dans lequel chaque demande d'envoi d'ID comprend une quantité de temps de demande, et la comparaison d'une priorité d'envoi du premier nœud de réseau avec une priorité d'envoi de l'autre nœud de réseau comprend :
la comparaison d'une première quantité de temps de demande avec une deuxième quantité de temps de demande, dans lequel la première quantité de temps de demande est une quantité de temps de demande dans une demande d'envoi d'ID diffusée par l'autre nœud de réseau, et la deuxième quantité de temps de demande est une quantité des temps de demande dans une demande d'envoi d'ID diffusée par le premier nœud de réseau ; et
lorsque la première quantité de temps de demande est supérieure à la deuxième quantité de temps de demande, la détermination que la priorité d'envoi du premier nœud de réseau est inférieure à la priorité d'envoi de l'autre nœud de réseau ; ou
lorsque la première quantité de temps de demande est inférieure à la seconde quantité de temps de demande, la détermination que la priorité d'envoi du premier nœud de réseau est supérieure à la priorité d'envoi de l'autre nœud de réseau.

4. Procédé selon la revendication 3, dans lequel chaque demande d'envoi d'ID comprend en outre une adresse de contrôle d'accès au support, MAC, et la comparaison d'une priorité d'envoi du premier nœud de réseau avec une priorité d'envoi de l'autre nœud de réseau comprend en outre :
lorsque la première quantité de temps de demande est égale à la seconde quantité de temps de demande, la comparaison d'une valeur d'une adresse MAC de l'autre nœud de réseau avec une valeur d'une adresse MAC du premier nœud de réseau ; et
lorsque la valeur de l'adresse MAC d'un autre nœud de réseau répond à une règle de comparaison prédéfinie, la détermination que la priorité d'envoi du premier nœud de réseau est inférieure à la priorité d'envoi de l'autre nœud de réseau ; ou
lorsque la valeur de l'adresse MAC d'un autre nœud de réseau ne correspond pas à la règle de comparaison prédéfinie, la détermination que la priorité d'envoi du premier nœud de réseau est supérieure à la priorité d'envoi de l'autre nœud de réseau, dans lequel la règle de comparaison prédéfinie comprend :
la valeur de l'adresse MAC de l'autre nœud de réseau est supérieure à la valeur de l'adresse MAC du premier nœud de réseau, ou la valeur de l'adresse MAC de l'autre nœud de réseau est inférieure à la valeur de l'adresse MAC du premier nœud de réseau.

5. Procédé selon la revendication 1, dans lequel le procédé comprend en outre :
un numéro d'ID de paquet de chaque nœud de réseau comprend un numéro de séquence de paquet variable et un numéro de domaine qui est utilisé pour identifier de manière unique un domaine de diffusion dans lequel le nœud de réseau est situé ; et
la mise à jour du numéro d'ID en synchronisation avec l'autre nœud de réseau dans le premier domaine de diffusion, pour obtenir un deuxième numéro d'ID comprend :
le changement d'un numéro de séquence de paquet dans le premier numéro d'ID pour obtenir le deuxième numéro d'ID, de sorte qu'un numéro de séquence de paquet modifié et le numéro de séquence de paquet inchangé répondent à la règle de changement, dans lequel le deuxième numéro d'ID comprend un premier numéro de domaine et le numéro de séquence de paquets modifiée.

6. Procédé selon la revendication 5, dans lequel chaque domaine de diffusion comprend un nœud maître, et le nœud maître est configuré pour gérer un nœud de réseau dans un domaine de diffusion dans lequel se trouve le nœud maître ; et
avant de diffuser une demande d'envoi d'ID dans le premier domaine de diffusion, le procédé comprend en outre :
la réception d'une instruction d'initialisation d'ID envoyée par un premier nœud maître, dans lequel l'instruction d'initialisation d'ID comprend le premier numéro de domaine et un numéro de séquence initial, et le premier nœud maître est un nœud maître dans le premier domaine de diffusion ;
sur la base de l'instruction d'initialisation d'ID, le réglage d'un numéro de séquence de paquet du premier nœud de réseau au numéro de séquence initial et la génération d'un numéro d'ID initial, dans lequel le numéro d'ID initial comprend le premier numéro de domaine et le numéro de séquence initial ;
le démarrage d'un compte à rebours à un moment de génération du numéro d'ID initial ; et
à la fin du compte à rebours, la réinitialisation du numéro de séquence de paquet du premier nœud de réseau au numéro de séquence initial.

7. Procédé selon la revendication 6, dans lequel le numéro de séquence initial vaut 0, la règle de changement est la règle à augmentation monotone, le numéro de séquence de paquet modifié est égal au numéro de séquence de paquet inchangé plus x, et x est supérieur ou égal à 1 ; ou
le numéro de séquence initial est M, la règle de changement est la règle à diminution monotone, le numéro de séquence de paquet modifié est égal au numéro de séquence de paquet inchangé moins x, et x est supérieur ou égal à 1.

8. Appareil de transmission de paquets (50) pour un premier nœud de réseau dans un réseau de support partagé, dans lequel le réseau de support partagé comprend au moins deux domaines de diffusion, chacun des au moins deux domaines de diffusion comprend au moins deux nœuds de réseau et des numéros d'identité, ID, empaquetée comprenant chacun un numéro m de séquences de paquet variable et un numéro n de domaine qui identifie de manière unique un domaine de diffusion dans lequel se trouve le nœud de réseau des nombres utilisés par tous les nœuds de réseau dans un premier domaine de diffusion pour identifier les paquets, lesdits numéros d'ID de paquet étant les mêmes au même moment pour tous les nœuds de réseau dans le même domaine de diffusion et étant différents des numéros d'ID de paquet utilisés par un nœud de réseau dans un autre domaine de diffusion pour identifier les paquets, le premier domaine de diffusion est un domaine de diffusion quelconque dans le réseau de support partagé, le premier réseau nœud est un nœud de réseau quelconque dans le premier domaine de diffusion, et l'appareil comprend :
un premier module de diffusion (501), configuré pour diffuser une première demande d'envoi d'ID dans le premier domaine de diffusion, dans lequel la première demande d'envoi d'ID est utilisée pour demander d'envoyer des informations spécifiées et comprend un premier numéro d'ID, et le premier numéro d'ID est un numéro d'ID de paquet utilisé par chaque nœud de réseau dans le premier domaine de diffusion à un moment actuel pour identifier un paquet ;
un premier module d'envoi (502), configuré pour : lorsqu'aucune demande d'envoi d'ID envoyée par un autre nœud de réseau n'est reçue dans un délai prédéfini, envoyer un premier paquet à un deuxième nœud de réseau, dans lequel le premier paquet comprend le premier numéro d'ID et l'autre nœud de réseau est un nœud dans le premier domaine de diffusion autre que le premier nœud de réseau ; et
un module de mise à jour (503), configuré pour : après l'envoi du premier paquet au deuxième nœud de réseau, mettre à jour le numéro d'ID en synchronisation avec l'autre nœud de réseau dans le premier domaine de diffusion, pour obtenir un deuxième numéro d'ID, dans lequel le deuxième numéro d'ID et le premier numéro d'ID répondent à une règle de changement prédéfinie, et la règle de changement est une règle à augmentation monotone ou une règle à diminution monotone, le premier domaine de diffusion étant un domaine de diffusion à un saut et l'autre nœud de réseau dans le premier domaine de diffusion détectant le numéro d'ID de paquet du premier nœud de réseau par l'écoute.
l'appareil comprenant en outre :
un module de comparaison (504) configuré pour : lorsqu'une demande d'envoi d'ID envoyée par l'autre nœud de réseau est reçue dans le délai prédéfini, comparer une priorité d'envoi du premier nœud de réseau avec une priorité d'envoi de l'autre nœud de réseau ;
un deuxième module d'envoi (505), configuré pour : lorsque la priorité d'envoi du premier nœud de réseau est supérieure à la priorité d'envoi de l'autre nœud de réseau, envoyer le premier paquet au deuxième nœud de réseau ; et
un deuxième module de diffusion (506), configuré pour : lorsque la priorité d'envoi du premier nœud de réseau est inférieure à la priorité d'envoi de l'autre nœud de réseau, diffuser une deuxième demande d'envoi d'ID après une période de temporisation prédéfinie, dans lequel la deuxième demande d'envoi d'ID est utilisée pour demander d'envoyer les informations spécifiées, la deuxième demande d'envoi d'ID comprend un deuxième numéro d'ID, et le deuxième numéro d'ID est un numéro d'ID mis à jour de manière synchrone par le premier nœud de réseau après que l'autre nœud de réseau a envoyé un paquet.

9. Appareil selon la revendication 8, dans lequel
le premier module de diffusion est configuré pour :
diffuser de manière répétée la première demande d'envoi d'ID dans le premier domaine de diffusion pendant k fois, dans lequel k est une valeur prédéfinie, et est supérieur ou égal à 2.

10. Appareil selon la revendication 8 ou la revendication 9, dans lequel chaque demande d'envoi d'ID comprend une quantité de temps de demande, et le module de comparaison comprend :
un premier sous-module de comparaison (5041), configuré pour comparer une première quantité de temps de demande avec une deuxième quantité de temps de demande, dans lequel la première quantité de temps de demande est une quantité de temps de demande dans une demande d'envoi d'ID diffusée par l'autre réseau nœud, et la deuxième quantité de temps de demande est une quantité de temps de demande dans une demande d'envoi d'ID diffusée par le premier nœud de réseau ;
un premier sous-module de détermination (5042), configuré pour : lorsque la première quantité de temps de demande est supérieure à la deuxième quantité de temps de demande, déterminer que la priorité d'envoi du premier nœud de réseau est inférieure à la priorité d'envoi de l'autre nœud de réseau ; et
un deuxième sous-module de détermination (5043), configuré pour : lorsque la première quantité de temps de demande est inférieure à la deuxième quantité de temps de demande, déterminer que la priorité d'envoi du premier nœud de réseau est supérieure à la priorité d'envoi de l'autre nœud de réseau.

11. Appareil selon la revendication 10, dans lequel chaque demande d'envoi d'ID comprend en outre une adresse de contrôle d'accès au support, MAC, et le module de comparaison comprend en outre :
un deuxième sous-module de comparaison, configuré pour : lorsque la première quantité de temps de demande est égale à la deuxième quantité de temps de demande, comparer une valeur d'une adresse MAC de l'autre nœud de réseau avec une valeur d'une adresse MAC du premier nœud de réseau ;
un troisième sous-module de détermination, configuré pour : lorsque la valeur de l'adresse MAC d'un autre nœud de réseau répond à une règle de comparaison prédéfinie, déterminer que la priorité d'envoi du premier nœud de réseau est inférieure à la priorité d'envoi de l'autre nœud de réseau ; et
un quatrième sous-module de détermination (5046), configuré pour : lorsque la valeur de l'adresse MAC d'un autre nœud de réseau ne répond pas à la règle de comparaison prédéfinie, déterminer que la priorité d'envoi du premier nœud de réseau est supérieure à la priorité d'envoi de l'autre nœud de réseau, dans lequel la règle de comparaison prédéfinie comprend :
la valeur de l'adresse MAC de l'autre nœud de réseau est supérieure à la valeur de l'adresse MAC du premier nœud de réseau, ou la valeur de l'adresse MAC de l'autre nœud de réseau est inférieure à la valeur de l'adresse MAC du premier nœud de réseau.

12. Appareil selon la revendication 8, dans lequel
un numéro d'ID de paquet de chaque nœud de réseau comprend un numéro de séquence de paquet variable et un numéro de domaine qui sont utilisés pour identifier de manière unique un domaine de diffusion dans lequel se trouve le nœud de réseau ; et
le module de mise à jour est configuré pour :
modifier un numéro de séquence de paquet dans le premier numéro d'ID pour obtenir le deuxième numéro d'ID, de sorte qu'un numéro de séquence de paquet modifié et le numéro de séquence de paquet inchangé répondent à la règle de changement, dans lequel le deuxième numéro d'ID comprend un premier numéro de domaine et le nombre de séquence de paquet modifié.

13. Appareil selon la revendication 12, dans lequel chaque domaine de diffusion comprend un nœud maître, et le nœud maître est configuré pour gérer un nœud de réseau dans un domaine de diffusion dans lequel se trouve le nœud maître ; et
l'appareil comprend en outre :
un premier module de réception, configuré pour recevoir une instruction d'initialisation d'ID envoyée par un premier nœud maître, dans lequel l'instruction d'initialisation d'ID comprend le premier numéro de domaine et un numéro de séquence initial, et le premier nœud maître est un nœud maître dans le premier domaine de diffusion ;
un module de génération, configuré pour : sur la base de l'instruction d'initialisation d'ID, définir un numéro de séquence de paquet du premier nœud de réseau sur le numéro de séquence initial et générer un numéro d'ID initial, dans lequel le numéro d'ID initial comprend le premier numéro de domaine et le numéro de séquence initial ;
un module de temporisation, configuré pour démarrer un compte à rebours à un moment de génération du numéro d'ID initial ; et
un module de réinitialisation, configuré pour : à la fin du compte à rebours, réinitialiser le numéro de séquence de paquet du premier nœud de réseau au numéro de séquence initial.
